# EUROPEAN PATENT APPLICATION

(11) **EP 1 627 839 A1**
(43) Date of publication of application: **22.02.2006**
(21) Application number: 04733463.6
(22) Date of filing: 17.05.2004
(51) Int. Cl.: B65H 54/30, G01N 33/53, G01N 37/00

(54) **YARN ARRANGEMENT DEVICE AND METHOD FOR YARN ARRANGEMENT USING THE DEVICE, YARN ARRANGEMENT TOOL, METHOD OF MANUFACTURING YARN ARRANGED BODY, AND METHOD OF MANUFACTURING LIVING BODY-RELATED SUBSTANCE IMMOBILIZING MICRO ARRAY**

(30) Priority: 19.05.2003 JP 2003140728
(71) Applicant: MITSUBISHI RAYON CO., LTD., Tokyo 108-8506 (JP)
(72) Inventor: SUMI, Toshinori, c/o Mitsubishi Rayon Co. Ltd, Yokohama-shi, Kanagawa 230-0053 (JP); FUKUDA, Toshihiko, c/o Mitsubishi Rayon Co. Ltd., Otake-shi, Hiroshima 739-0693 (JP); HIROMOTO, Yasuo, c/o Mitsubishi Rayon Co. Ltd., Yokohama-shi, Kanagawa 230-0053 (JP); IKEDA, Tadanobu, c/o Mitsubishi Rayon Co. Ltd., Otake-shi, Hiroshima 739-0693 (JP)
(74) Representative: HOFFMANN EITLE
(86) International application number: PCT/JP2004/006997
(87) International publication number: WO 2004/101414

(57) **Abstract**

A fiber array device for arraying fibers three-dimensionally, includes: a fiber winding device onto which a fiber is wound; and a fiber supply device that supplies the fiber to the fiber winding device, wherein the fiber supply device is provided with a movable guide that supplies fiber to the fiber winding device while undergoing relative displacement, and wherein the fiber winding device has a fiber winding bobbin that winds fiber onto its circumference as it rotates around a shaft, and fiber array flat plates a plurality of which are stacked respectively at a plurality of predetermined positions on the circumference of the fiber winding bobbin and on whose respective external surfaces the fibers are arrayed. In addition, there is provided a fiber array jig. It is thereby possible to array fibers three-dimensionally extremely efficiently at a high density and with a high degree of accuracy.

## Description

### BACKGROUND OF THE INVENTION

### Field of the Invention

The present invention relates to a fiber array device for arraying a plurality of fibers three dimensionally, a fiber array method that uses this device, and a fiber wound object and fiber array body obtained by arraying fibers using this method. The present invention also relates to a jig for arraying a plurality of fibers three-dimensionally and a method of manufacturing a fiber array body that uses this jig. Furthermore, the present invention relates to a method of manufacturing from the fiber array body a microarray to which organism related substance has been fixed that is used to examine and detect specific organism related substance.

### Description of Related Art

An analysis method known as the DNA microarray method (also known as the DNA chip method) is known as a method of performing collective expression analysis of multiple genes.

In this method, using a flat substrate piece that is known as a microarray or chip (referred to below as a DNA microarray) on which a number of DNA fragments have been arrayed at a high density and also fixed in position, the detection and quantification of nucleic acids based on inter nucleic acid hybridization reactions is performed on the individual fixed DNA fragments.

Using this method, the reaction sample only needs to be very small, and a large variety of reaction specimens can be analyzed and quantified rapidly and statistically with excellent repeatability.

An example of a specific DNA microarray method is a method in which a sample is taken of the expressed genes of cells or the like being researched that have been identified using fluorescent dye or the like, and, by then performing hybridization on this sample on a DNA microarray, complementary nucleic acids (DNA or RNA) are bonded together. These bond locations are then read using a suitable fluorescence detector.

According to this method, the respective gene quantities in the sample can be measured quickly.

An example of technology for fixing an organism related substance such as nucleic acids on a microarray is a method that, as is described in Japanese Patent Application Unexamined Publication No. 2001-239594, uses fiber as a fixed carrier for organism related substance.

In this method, firstly, a fiber array body in which a plurality of fibers, which are fixed carriers, have been arrayed three-dimensionally in an orderly manner is prepared. This fiber array body is then sliced into thin pieces. As a result, microarrays in the form of thin pieces on which fibers are arrayed two-dimensionally at high density are obtained. In addition, here, in order to manufacture a fiber array body on which a plurality of fibers have been arrayed systematically, a plurality of jigs that have holes in the same pattern as the desired array pattern are used together.

Specifically, firstly, these jigs are laid out such that the positions of the holes are lined up in mutual contact. Fibers, which are fixed carriers for organism related substance, are then made to penetrate respectively those holes in the jigs that are in the same positional relationship. Next, the gap between the jigs is increased so that tension is imparted to the respective fibers that are arrayed three-dimensionally between the jigs, and the fibers are aligned. The gaps between the fibers are then filled using hardening resin and the fibers are fixed when the resin hardens.

The fiber array body that is obtained by fixing the resin in this manner is then sliced perpendicularly to the longitudinal direction of the fibers. As a result, an organism related substance fixed microarray is obtained. Note that, here, it is also possible to fix organism related substance in the fibers in advance. It is also possible to align a plurality of fibers and, after these fibers have been fixed by resin or the like, fix organism related substance to each fiber.

According to this method, it is possible to simultaneously manufacture a large number of organism related substance fixed microarrays in the same array.

On the other hand, there is also a need for organism related substance fixed microarrays that have a large number of fibers per unit surface area, namely, that have a large number of types of fixed organism related substance per unit area. In order to increase the number of fibers, it is necessary to reduce the array spacing (i.e., the array pitch) between fibers. Furthermore, there are demands for the outer diameter of the fibers to be made more narrow and also for the diameter of the holes into which the fibers are inserted to be made smaller.

However, in the method described in Japanese Patent Application Unexamined Publication No. 2001-239594, as is described above, a plurality of jigs in which a large number of holes have been formed are used, and it is necessary to insert a single fiber through each one of the holes. Accordingly, if the array pitch, hole diameter, and fiber outer diameter are reduced in size, the following problems occur.

Namely, in the procedure to guide a fiber that is to be inserted into a hole to a hole, and in the procedure to insert the fiber and the like, normally, minute forceps and nozzles are used to move the fibers. However, at such times, fibers that have already been inserted in adjacent holes tend to obstruct the operation of the forceps and nozzles. This tendency is particularly noticeable when the array pitch, hole diameter, and fiber outer diameter are made smaller. Moreover, if the outer diameter of the fibers is reduced in size, there is a deterioration in the fiber rigidity, and the problem arises that inserting the fibers in the holes is made even more difficult.

As is described above, in a conventional process to manufacture a fiber array body that uses fibers as a carrier for fixing organism related substance, it is difficult to array the fibers at a high density with any degree of efficiency and, in large volume industrial production in particular, this lack of efficiency is a major problem.

As a result of repeated thorough investigations in light of the above described circumstances, the present inventors discovered that, when manufacturing a fiber array body that uses fibers as carriers for fixing organism related substance, by using a specific device and jig for arraying fibers, it is possible to manufacture fiber arrayed bodies extremely efficiently in which the fibers are arrayed at a high density and with great precision, and thus realized the present invention. Accordingly, it is an object of the present invention to provide a fiber array device and a fiber array jig that enable fiber arrayed bodies and the like to be manufactured extremely efficiently, at a high density, and with great precision.

### SUMMARY OF THE INVENTION

In order to solve the above described problems, the present invention is a fiber array device for arraying fibers three-dimensionally, that comprises: a fiber winding device onto which a fiber is wound; and a fiber supply device that supplies the fiber to the fiber winding device, wherein the fiber supply device is provided with a movable guide that supplies fiber to the fiber winding device while undergoing relative displacement, and wherein the fiber winding device has a fiber winding bobbin that winds fiber onto its circumference as it rotates, and fiber array flat plates a plurality of which are stacked respectively at a plurality of predetermined positions on the circumference of the fiber winding bobbin and on whose respective external surfaces the fibers are arrayed.

It is preferable that a plurality of concave rows in which fibers are individually arrayed are formed substantially parallel with each other in an external surface of the fiber array flat plates, and that the fiber array flat plates are stacked on the circumference such that the concave rows are perpendicular to a rotation shaft of the fiber winding bobbin.

It is also possible for an array pitch of fibers that are arrayed on external surfaces of the fiber array flat plates making up at least one stacked object from among each of the stacked objects in the plurality of predetermined positions to be different from an array pitch of fibers that are arrayed on external surfaces of the fiber array flat plates making up the other stacked objects.

It is preferable that at least two positioning through holes are formed in the fiber array flat plates, and that supporting columns that are inserted through the positioning through holes are provided on the circumference of the fiber winding bobbin.

The fiber array method of the present invention is a method for arraying fibers three-dimensionally using the above described fiber array device that comprises: a first step in which the individual fiber array flat plates are arranged in the plurality of predetermined positions; a second step in which the fiber winding bobbin is rotated a predetermined number of times, and fiber is supplied while the movable guide is being moved so that the fibers are gradually arrayed on the arranged fiber array flat plates; and a third step in which the other fiber array flat plates are each stacked on top of each fiber array flat plate on which fibers have been arrayed, wherein the second step and third step are repeated a plurality of times.

It is preferable that the fibers are at least one selected from a group consisting of synthetic fibers, semi-synthetic fibers, regenerated fibers, inorganic fibers, and natural fibers.

The method of manufacturing a fiber array body of the present invention is a method in which the fibers that have been arrayed three-dimensionally using the above described fiber array method are fixed. At this time, it is preferable that a curable resin is used to fill gaps between the fibers and is then cured so as to fix the fibers.

It is also possible for organism related substance to be fixed in advance to the fibers, and it is also possible to fix organism related substance to fixed fibers.

The method of manufacturing a microarray in which organism related substance has been fixed of the present invention is a method in which the fiber array body is sliced into thin pieces in a direction intersecting the fibers.

A fiber wound object of the present invention comprises: a fiber winding device that has a fiber winding bobbin and stacked objects made up of two or more fiber array flat plates that have each been stacked at a plurality of predetermined positions on the circumference of the fiber winding bobbin; and fibers that are arrayed and wound onto an external surface of each fiber array flat plate.

It is also possible for an array pitch of fibers that are arrayed on external surfaces of the fiber array flat plates making up at least one stacked object from among each of the stacked objects in the plurality of predetermined positions to be different from an array pitch of fibers that are arrayed on external surfaces of the fiber array flat plates making up the other stacked objects.

Furthermore, in order to solve the above described problems, the present invention is a fiber array jig for arraying a plurality of fibers three-dimensionally, that comprises: a plurality of fiber array flat plates on one surface of each of which a plurality of concave rows in which fibers are individually arrayed are formed substantially parallel with each other; and a positioning member that is used to place these fiber array flat plates in predetermined positions, wherein at least two of the fiber array flat plates are placed apart from each other by the positioning member such that the concave rows formed on these fiber array flat plates are in alignment with each other, and one or more of the other fiber array flat plates is stacked on top of these fiber array flat plates.

It is preferable that at least two positioning through holes are formed in each of the fiber array flat plates, and that the positioning member is provided with supporting columns that place each fiber array flat plate in a predetermined position by being inserted through each of the positioning through holes.

The method of manufacturing a fiber arrayed body of the present invention is a method that comprises: a fiber array step in which a plurality of fibers are arrayed three-dimensionally using the above described fiber array jig; and a fiber fixing step in which the three-dimensionally arrayed fibers are fixed.

An example of a first mode of the above described fiber array step is a method that comprises: a first step in which at least two of the fiber array flat plates are placed apart from each other by the positioning member such that the concave rows formed on these fiber array flat plates are in alignment with each other; a second step in which fibers are individually arrayed so as to span completely across the concave rows that are positioned in alignment with each other; a third step in which other fiber array flat plates are stacked respectively on top of the at least two fiber array flat plates; and a fourth step in which tension is imparted to the arrayed fibers, wherein each of the second step through fourth step is repeated a plurality of times.

An example of a second mode of the above described fiber array step is a method that comprises: a first step in which at least one of the fiber array flat plates is placed in a predetermined position by the positioning member; a second step in which a fiber array flat plate that has completed fiber bonding is manufactured by arraying and bonding one by one ends on one side of fibers that have been cut to a predetermined length in the concave rows in the other one of the fiber array flat plates; a third step in which ends on the other side of the arrayed and bonded fibers are arrayed one by one in the concave rows of the fiber plate that was placed in the predetermined position; a fourth step in which another fiber array flat plate is stacked by the positioning member on top of the fiber array flat plate that was placed in the predetermined position; a fifth step in which the fiber array flat plate that has completed fiber bonding is placed apart by the positioning member from the fiber array flat plate that was placed in the predetermined position such that the concave rows formed on the fiber array flat plate that has completed fiber bonding are in alignment with the concave rows formed on the fiber array flat plate that was placed in the predetermined position; and a sixth step in which tension is imparted to the arrayed fibers, wherein each of the second step through sixth step is repeated a plurality of times.

The second step of the above second mode preferably comprises a step in which the fiber array flat plates are mounted on drum faces of a fiber winding drum that rotates around a shaft and are rotated, and fiber is continuously supplied to the fiber winding drum so that the fibers are arrayed in sequence in the plurality of concave rows that are formed in the fiber array flat plates, and thereafter the arrayed fibers are cut off outside the fiber array flat plates.

It is preferable that the fibers are at least one selected from a group consisting of synthetic fibers, semi-synthetic fibers, regenerated fibers, inorganic fibers, and natural fibers.

In the fiber fixing step, it is preferable that a curable resin is used to fill gaps between the three-dimensionally arrayed fibers and is then cured.

Moreover, it is preferable that organism related substance is fixed in advance to the fibers, or that, after the fiber fixing step, organism related substance is fixed to the fibers.

The method of manufacturing a microarray in which organism related substance has been fixed of the present invention is a method in which a fiber array body manufactured using the above described method is sliced into thin pieces in a direction intersecting the fibers.

### BRIEF DESCRIPTION OF THE DRAWINGS

FIG. 1 is a perspective view showing an example of the fiber array device of the present invention.
FIG. 2 is an enlarged perspective view of a movable guide provided in the fiber array device shown in FIG 1.
FIG. 3A is a perspective view and FIG. 3B is a frontal view of a fiber winding bobbin provided in the fiber array device shown in FIG. 1.
FIG. 4A is a perspective view of a precise pitch flat plate and FIG. 4B is a perspective view of an enlarged pitch flat plate provided in the fiber array device shown in FIG 1.
FIG. 5 is a frontal view showing a state in which the fiber array flat plates shown in FIGS. 4A and 4B are positioned and stacked in predetermined positions on the circumference of the fiber winding bobbin shown in FIGS. 3A and 3B.
FIG. 6 is a frontal view showing an example of a fiber wound object of the present invention.
FIG. 7 is a perspective view showing an example of a fiber array body manufactured using the present invention.
FIG. 8 is a perspective view showing an example of an organism related substance fixed microarray manufactured using the present invention.
FIG. 9 is a perspective view showing an example of a potting block used in the present invention.
FIG 10 is an explanatory view illustrating a method of manufacturing a fiber array body of the present invention.
FIG 11 is an explanatory view illustrating a method of manufacturing a fiber array body of the present invention.
FIG 12 is a perspective view showing one method of introducing organism related substance into each fiber of a fiber array body.
FIG 13 is a perspective view showing an example of a fiber array jig of the present invention.
FIG. 14A is a perspective view showing a fiber array flat plate and FIG. 14B is a perspective view showing a positioning member forming the fiber array jig shown in FIG. 13.
FIG. 15 is a perspective view showing another example of the fiber array jig of the present invention.
FIG 16 is a perspective view showing an example of a fiber array body manufactured using the present invention.
FIG 17 is a perspective view illustrating a first step of a first embodiment of a fiber arraying process that uses the fiber array jig shown in FIG. 13.
FIG. 18 is a perspective view illustrating a second step of a first embodiment of a fiber arraying process that uses the fiber array jig shown in FIG 13.
FIG. 19 is a perspective view illustrating a third step of a first embodiment of a fiber arraying process that uses the fiber array jig shown in FIG. 13.
FIG. 20 is a perspective view illustrating a temporary fixing step of a first embodiment of a fiber arraying process that uses the fiber array jig shown in FIG. 13.
FIG. 21 is a perspective view illustrating a fourth step of a first embodiment of a fiber arraying process that uses the fiber array jig shown in FIG. 13.
FIG 22 is a side view showing a state in which fibers are arrayed three-dimensionally and tension is applied to each fiber using the fiber array jig shown in FIG. 13.
FIG. 23 is a perspective view illustrating a first step of a second embodiment of a fiber arraying process that uses the fiber array jig shown in FIG. 13.
FIG. 24 is a perspective view illustrating a second step of a second embodiment of a fiber arraying process that uses the fiber array jig shown in FIG. 13.
FIG. 25 is a perspective view illustrating a third step of a second embodiment of a fiber arraying process that uses the fiber array jig shown in FIG 13.
FIG 26 is a perspective view illustrating a fourth step of a second embodiment of a fiber arraying process that uses the fiber array jig shown in FIG. 13.
FIG 27 is a perspective view illustrating a temporary fixing step of a second embodiment of a fiber arraying process that uses the fiber array jig shown in FIG 13.
FIG. 28 is a perspective view illustrating a fifth step of a second embodiment of a fiber arraying process that uses the fiber array jig shown in FIG. 13.
FIG. 29A is a plan view and FIG. 29B is a side view of a winding mechanism that can be used in the second step of the aforementioned second embodiment.
FIG. 30 is a side view illustrating a fiber fixing step in the present invention.
FIG 31 is a perspective view showing an example of a potting block used in the fiber fixing step.
FIG. 32 is a side view illustrating a fiber fixing step in the present invention.
FIG. 33 is a side view illustrating a fiber fixing step in the present invention.
FIG 34 is a perspective view showing another example of a fiber array body of the present invention.
FIG 35 is a side view showing yet another example of a fiber array body of the present invention.
FIG. 36 is a perspective view showing an example of an organism related substance fixed microarray manufactured using the present invention.
FIG. 37 is a perspective view showing one method of introducing organism related substance into each fiber of a fiber array body.

### DETAILED DESCRIPTION OF THE INVENTION

The present invention will now be described in detail.

### [Fiber array device]

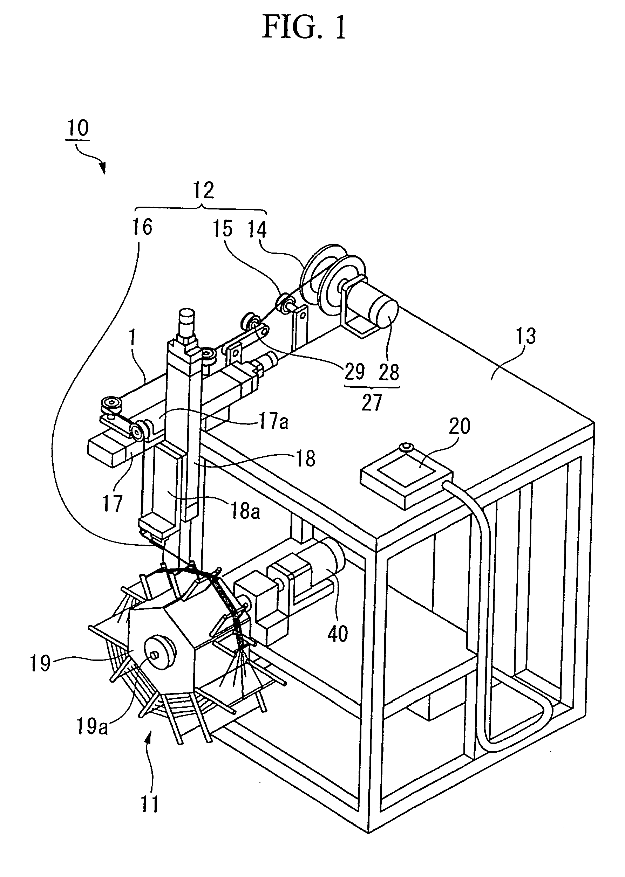

FIG 1 is a perspective view showing a state in which fibers 1 are arrayed three-dimensionally using a fiber array device 10 of the present invention.

This fiber array device 10 is equipped with a fiber winding device 11 on which the fibers 1 are wound, and a fiber supply device 12 that supplies fibers to the fiber winding device 11. These are mounted on a base 13 so as to form the fiber array device 10.

The fiber supply device 12 of this example is formed by a fiber supply bobbin 14 on which the fibers 1 are wound, a guide roller 15 that sends the fibers 1 forward, and a movable guide 16 (described below in detail). Fibers 1 from the fiber supply bobbin 14 are supplied to the fiber winding device 11 via the guide roller 15 and the movable guide 16.

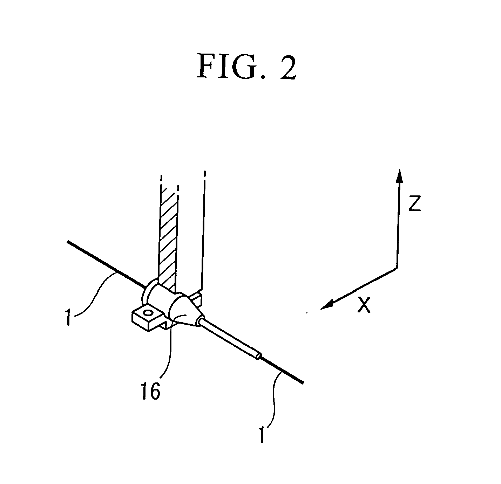

Here, as is shown in an enlarged view in FIG. 2, the movable guide 16 is formed in a nozzle shape into which the fibers 1 are inserted, and is able to move in both a vertical direction (i.e., a Z axial direction) and a horizontal direction (i.e., an X axial direction).

Specifically, the symbol 17 in FIG. 1 indicates an X axial stage whose bottom surface is fixed to the top of the base 13 such that a cross section thereof is formed as a rectangular column and the longitudinal direction thereof is aligned in a horizontal direction. An X axial movement table 17a is provided on a top surface of this stage and moves in a horizontal direction along this surface. The symbol 18 in FIG. 1 indicates a Z axial stage, one side surface of which is fixed to the X axial movement table 17a such that, in the same manner, a cross section thereof is formed as a rectangular column and the longitudinal direction thereof is aligned in a vertical direction. A Z axial movement table 18a is provided on a side surface that forms a right angle with a side surface of this stage and moves in a vertical direction along this surface. The movable guide 16 is able to move freely in a vertical direction and horizontal direction in conjunction with the Z axial movement table 18a as it is fixed to the Z axial movement table 18a. As a result of this movement, the fibers 1 are able to be supplied to the fiber winding device 11.

Note that the horizontal direction in which the movable guide 16 is able to move is a direction that is parallel with the shaft 19a of the fiber winding bobbin (described below) indicated by the symbol 19.

A control device (not shown) that controls movement of the movable guide 16 is provided on the movable guide 16. The timings, directions, and distances of movements by the movable guide 16 can be optionally controlled by this control device.

For example, it is possible for an operator to input into the control device using an operating keyboard 20 instructions as to how far and in which direction the movable guide 16 is to move each time the fiber winding bobbin 19 makes one rotation. A motor 40 that is provided with a rotation angle detecting mechanism such as a rotary encoder is connected to the fiber winding bobbin 19, and a signal is sent to the control device each time the fiber winding bobbin 19 rotates. By employing such a structure, the movable guide 16 moves in accordance with commands from the control unit in conjunction with the rotation of the fiber winding bobbin 19.

It is preferable that an inner diameter of the nozzle-shaped movable guide 16 is formed so as to be 10 to 80% and, more preferably, 30 to 50% larger than the outer diameter of the fibers 1. It is also preferable that the outer diameter of the nozzle-shaped movable guide 16 is formed so as to be 40 to 150% and, more preferably, 70 to 100% larger than the inner diameter thereof. The length of the nozzle-shaped portion may also be 5 to 30 times the outer diameter and, more preferably, 10 to 20 times the outer diameter. It is also preferable that the nozzle-shaped movable guide 16 is formed from stainless steel.

The fiber winding device 11 provided in the fiber array device 10 of this example is formed having a fiber winding bobbin 19 that winds the fibers 1 onto its circumference as it rotates around the shaft 19a, and fiber array flat plates, two or more of which are stacked at each of a plurality of predetermined positions on the circumference of the fiber winding bobbin 19, and on whose outer surface the fibers 1 are arrayed.

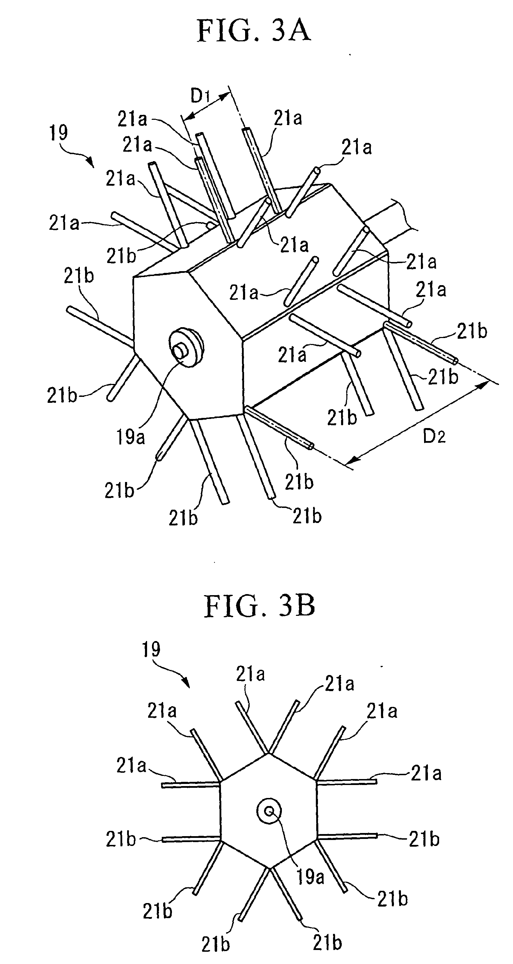

As is shown in FIGS. 3A and 3B, the fiber winding bobbin 19 is formed as a hexagonal column, and is mounted on the base 13 such that the axial direction thereof is a horizontal direction. The fiber winding bobbin 19 rotates around the shaft 19a.

Four supporting columns 21a and 21b are provided on each of the six side surfaces of the hexagonal columns so as to be perpendicular to the surfaces. The overall fiber winding bobbin 19 accordingly has a total of 24 supporting columns 21a and 21b. In particular, these supporting columns 21a and 21b are provided in groups of two on each side surface in the vicinity of the boundaries between adjacent side surfaces. The distance between the two is a short distance (i.e., a pitch D₁) for one group and a broad distance (i.e., a pitch D₂) for the other group. Hereinafter, the supporting columns provided at the pitch D₁ will be referred to as the precise pitch supporting columns 21a, while the supporting columns provided at the pitch D₂ will be referred to as the broad pitch supporting columns 21b. In this example, there are six groups each of both the precise pitch supporting columns 21a and the broad pitch supporting columns 21b.

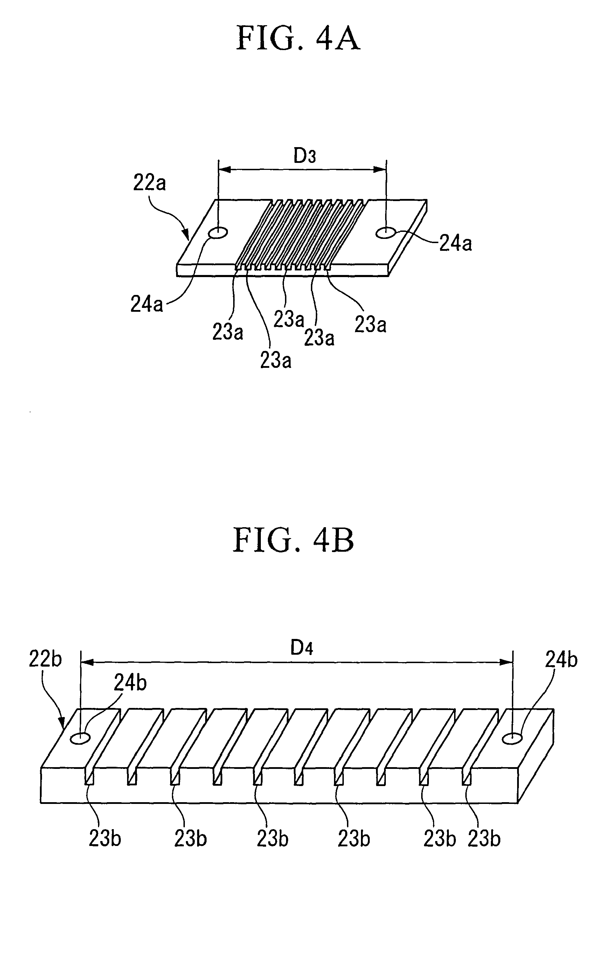

The fiber array device 10 of this example is provided with 60 each of the two types of fiber array flat plates 22a and 22b shown in FIGS. 4A and 4B to make a total of 120.

Ten concave rows 23a, each having the same shape and in each of which is arrayed a single fiber 1, are formed substantially in parallel with each other on one side of the rectangular fiber array flat plates 22a (referred to below as the precise pitch flat plates) shown in FIG. 4A. In the same way as in the precise pitch array plates 22a, the rectangular fiber array flat plates (referred to below as the broad pitch flat plates) 22b shown in FIG. 4B have ten concave rows 23b formed on one surface thereof substantially in parallel with each other. In this example, the distance between the concave rows (i.e., the pitch), in particular, and the thickness of the flat plates is greater in the broad pitch flat plates 22b compared to the precise pitch flat plates 22a.

Moreover, in this example, the length (i.e., a direction following the concave rows) is longer and the width is smaller in the precise pitch flat plates 22a than in the broad pitch flat plates 22b. Furthermore, when a cross-sectional configuration in the vertical direction of the concave rows 23a relative to the lengthwise direction of the concave rows 23a is rectangular, it is preferable that the width and depth of the concave rows 23a of the precise pitch flat plates 22a are within a range of 100 to 125% of the size of the outer diameter of the arrayed fibers. Furthermore, in order to make it easier to accurately array fibers and from the viewpoint of work efficiency when inserting fibers in the concave rows 23a, it is more preferable that the width and depth of the concave rows 23a is approximately 110% of the size of the outer diameter of the fibers 1. On the other hand, it is preferable that the width and depth of the concave rows 23b of the broad pitch flat plates 22b is within a range of 105 to 150% of the size of the outer diameter of the fibers 1. It is possible to array the fibers 1 more accurately in the precise pitch flat plates 22a.

The precise pitch flat plates 22a of this example are rectangular flat plates having a thickness of 0.42 mm, a width of 10 mm, and a length of 40 mm. Ten concave rows 23a having a width of 0.3 mm and a depth of 0.3 mm are formed at a pitch of (i.e., at intervals of) 0.42 mm along the longitudinal direction on one surface of the rectangular flat plates 22a. Moreover, the broad pitch flat plates 22b of this example are rectangular flat plates having a thickness of 4.5 mm, a width of 8 mm, and a length of 170 mm. Ten concave rows 23b having a width of 0.5 mm and a depth of 2 mm are formed at a pitch of 4.5 mm along the longitudinal direction on one surface of the rectangular flat plates 22b.

One circular through hole (indicated by the symbols 24a and 24b) that is used for positioning is formed in the vicinity of both side ends of the fiber array flat plates 22a and 22b. A pitch D₃ between two positioning through holes 24a in the precise pitch flat plates 22a is the same as a pitch D₁ between the precise pitch supporting columns 21a. In addition, a pitch D₄ between two positioning through holes 24b in the broad pitch flat plates 22b is the same as a pitch D₂ between the broad pitch supporting columns 21b. Furthermore, the outer diameters of the respective supporting columns 21a and 21b are formed smaller than the inner diameters of the respective positioning through holes 24a and 24b so as to provide clearance between them.

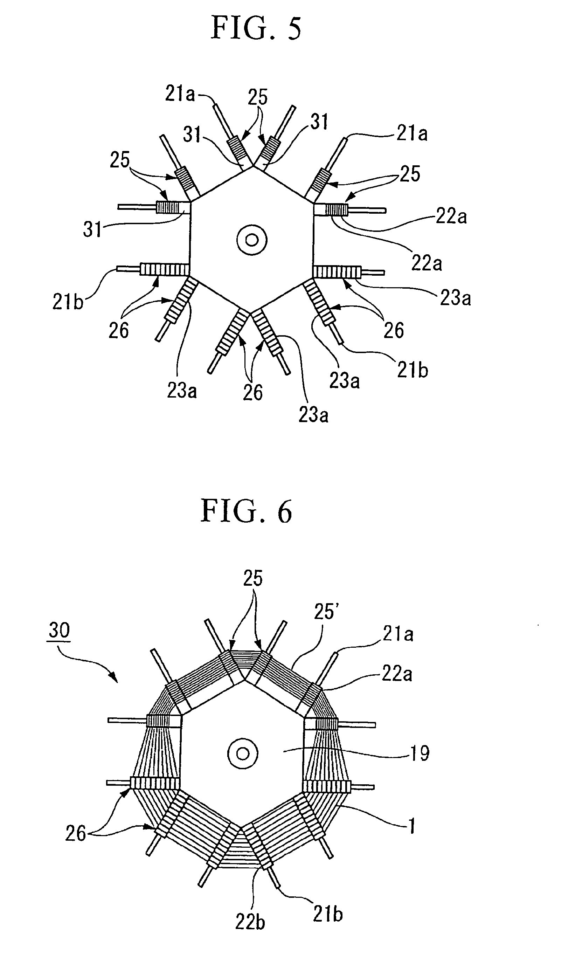

Accordingly, by fitting the precise pitch supporting columns 21a together with the positioning through holes 24a of the precise pitch flat plates 22a, and by fitting the broad pitch supporting columns 21b together with the positioning through holes 24b of the broad pitch flat plates 22b, as is shown in FIG. 5, the fiber array flat plates 22a and 22b can each be accurately located at a plurality of predetermined positions on the circumference of the fiber winding bobbin 19. Furthermore, other fiber array flat plates 22a and 22b can each be stacked onto the respective fiber array flat plates 22a and 22b that have already been placed in position. Fibers 1 are arrayed at a narrow array pitch on a stacked body 25 made up of precise pitch flat plates 22a that have been stacked in this manner (described below in detail). Fibers 1 are also arrayed on a stacked body 26, which is formed by stacking broad pitch flat plates 22b, at a larger array pitch than that of the stacked body 25 formed by stacking the precise pitch flat plates 22a.

Note that if these fiber array flat plates 22a and 22b are positioned and stacked on the circumference of the fiber winding bobbin 19, the surfaces thereof on which the concave rows 23a and 23b are formed become external surfaces.

Moreover, in this example, ten layers of the 60 precise pitch flat plates 22a are stacked on each of the six groups of precise pitch supporting columns 21a, while ten layers of the 60 broad pitch flat plates 22b are stacked on each of the six groups of broad pitch supporting columns 21b. In addition, because ten concave rows 23a and ten concave rows 23b are formed on the respective fiber array flat plates 22a and 22b, by using the fiber array device 10 of this example, it is possible to ultimately stack ten rows multiplied by ten layers of the fibers 1.

Note that, in FIG 5, the precise pitch flat plates 23a are stacked onto the precise pitch supporting columns 21a after a spacer 31 having the same shape as the precise pitch flat plates 22a and on which no concave rows 23a are formed has first been fitted onto the precise pitch supporting columns 21a.

There is no particular restriction regarding the materials or manufacturing methods of the fiber array flat plates 22a and 22b provided that the concave rows 23a and 23b are formed thereon at accurate sizes. For example, preferably, the precise pitch flat plates 22a are made by photo etching concave rows on a stainless steel flat plate as this provides both anti-corrosiveness and strength. Alternatively, the precise pitch flat plates 22a may preferably be made by molding a resin such as polymethyl methacrylate using a precision injection molding method that employs precise metal dies. For the broad pitch flat plates 22b, the same materials and manufacturing methods as for the precise pitch flat plates 22a can be preferably used. However, in addition to these, it is also possible to use flat plates in which concave rows 23a and 23b have been formed by machine working stainless steel or aluminum flat plates.

The cross-sectional configuration of the concave rows 23a and 23b that are formed is not limited to a rectangular configuration such as that shown in the drawings. Bottom portions of these concave rows may also be formed having a curved surface shape to follow the external contour of the fibers 1 (i.e., in a U shape), or in a trapezoidal shape or V shape.

Moreover, the fiber array device 10 in the example shown in FIG 1 is provided with the fiber winding device 11 and the fiber supply device 12 described above. This fiber array device 10 is also provided with a tension imparting device 27 that imparts tension to the fibers 1 supplied to the fiber supply device 12.

The tension imparting device 27 of this example is provided with a torque motor 28 that is connected to the fiber supply bobbin 14, and with a tensioner 29 that is located on the downstream side of the guide roller 15. When the fiber 1 is being supplied while the movable guide 16 is moving, as is described above, the tension imparting device 27 is able to impart constant tension within a fixed range to the fiber 1 such that the fiber 1 is not excessively tensioned and is not too loose.

As is described above, according to the fiber array device 10 of this example, it is possible to accurately array the fibers 1 in ten rows multiplied by ten layers. Moreover, the fibers 1 are arrayed at a small array pitch in the stacked body 25 of the precise pitch flat plates 22a. Furthermore, the fibers 1 are arrayed at a larger array pitch in the stacked body 26 of the broad pitch flat plates 22b than that in the stacked body 25 of the precise pitch flat plates 22a. Accordingly, by using this fiber array device 10, as is described below in detail, it is possible to obtain two fiber array bodies with the fibers arrayed on one end side at a precise array pitch and arrayed on the other end side at an array pitch that is larger than this precise array pitch.

Moreover, in this example, there are ten concave rows 23a and 23b formed in each of the fiber array flat plates 22a and 22b. By stacking these fiber array flat plates 22a and 22b in ten layers, fibers can be arrayed in ten rows multiplied by ten layers. The number of concave rows 23a and 23b formed in one fiber array flat plate 22a or 22b as well as the number of stacked layers are not restricted provided that there is a plurality of each, and can be set to a desired number. Preferably, the number of concave rows 23a and 23b that are formed in each fiber array flat plate 22a and 22b is in a range of 5 to 100, while the number of stacked layers of the fiber array flat plates 22a and 22b is also in a range of 5 to 100.

It is also possible to change the number of fibers 1 that are arrayed in each layer by varying the number of concave rows 23a and 23b that are formed in the fiber array flat plates 22a and 22b of the respective layers.

In this example, the pitch between positioning through holes 24a in the precise pitch flat plates 22a is taken as D₃, and the pitch between positioning through holes 24b in the broad pitch flat plates 22b is taken as D₄, and D₃ is made equal to D₄. In this case, it is also necessary for the pitches D₁ and D₂ between the corresponding supporting columns 21a and 21b to be made equal.

Furthermore, in this example, the fiber winding bobbin 19 is a hexagonal column, however, the fiber winding bobbin 19 is not restricted to being a hexagonal column provided that it is able to wind on fiber 1 by rotating around the shaft 19a. For example, the fiber winding bobbin 19 may be an angular column having between 3 and 5 or also 7 or more side surfaces, or it may not even be an angular column. However, an angular column having between 4 and 8 side surfaces, in particular, is preferably used as this enables fiber 1 to be arrayed with the fiber array flat plates 22a and 22b placed and stacked stably on the circumference of the fiber winding bobbin 19.

The fiber array flat plates 22a and 22b that are provided in the fiber array device 10 of this example are favorably used as jigs for accurately arraying fibers 1 in predetermined positions. However, it is not essential for the concave rows 23a and 23b to be formed therein. For example, it is also possible to employ a structure in which a sticky layer or adhesive layer is formed on the surface of these fiber array flat plates that forms the outer surface thereof when they are stacked on the circumference of the fiber winding bobbin 19, and for the fibers 1 to be fixed thereto. Examples of methods of forming a sticky layer or adhesive layer include coating a sticky agent or adhesive agent onto the surface that forms the outer surface of the flat plates, and adhering a commercially available two-sided tape onto the surface that forms the outer surface of the flat plates. A material that does not impregnate the fibers 1 is used for the sticky agent, the adhesive agent, or the two-sided tape. If a material that does impregnate the fibers 1 is used, there is a possibility that the fibers 1 will break during the process to array the fibers 1. A water-soluble vinyl acetate based adhesive agent is preferably used for the adhesive agent.

### [Fiber array method and fiber array object]

Next, a description will be given of a specific method for arraying the fibers 1 in ten rows multiplied by ten layers using the fiber array device 10 of the illustrated example.

Firstly, a first step is performed in which the positioning through holes 24a and 24b of the broad pitch flat plates 22b and the precise pitch flat plates 22a are fitted onto all of the broad pitch supporting columns 21b and precise pitch supporting columns 21a of the fiber winding bobbin 19, so that one of each of these flat plates is positioned. At this point, six plates each of the broad pitch flat plates 22b and the precise pitch flat plates 22a making a total of twelve plates are placed on the circumference of the fiber winding bobbin 19. Note that, if necessary, a spacer 31 can be placed on the precise pitch supporting columns 21a prior to the placement thereon of the precise pitch flat plates 22a.

Next, a second step is performed in which this fiber winding bobbin 19 is rotated a predetermined number of times, and the movable guide 16 is moved by the control device so that the fiber 1 is arrayed on the fiber array flat plates 22a and 22b that have been put in position.

Namely, firstly, by rotating the fiber winding bobbin 19 once, the fiber 1 supplied from the movable guide 16 is inserted in sequence in the concave rows 23a and 23b on one end of the respective fiber array flat plates 22a and 22b that have been put in position in the first step. Here, because the concave rows 23b at one end of the broad pitch flat plates 22b and the concave rows 23a and 23b at one end of the precise pitch flat plates 22a are not on the same circumference, the fiber 1 is supplied while the movable guide 16 is moved appropriately in the X axial direction.

After the fiber winding bobbin 19 has been rotated once in this manner, in order to insert the fiber 1 onto the adjoining concave rows 23a and 23b, the movable guide 16 is moved in the X axial direction and the fiber winding bobbin 19 is immediately rotated.

Ten concave rows 23a or 23b are formed in each one of the fiber array flat plates 22a and 22b of this example. Accordingly, by rotating the fiber winding bobbin 19 ten times, the fiber 1 can be arrayed in sequence as far as the concave rows 23a and 23b at the other end of the fiber array flat plates 22a and 22b.

Note that, it is preferable that tension of 1 to 20 mN, and more preferably, of 5 to 10 mN is imparted by the tension imparting device 27 to the fibers 1 that are arrayed in this manner.

It is also preferable that the distance between the distal end of the movable guide 16 and the fiber winding bobbin 19 is as short as possible, as this enables an accurate array to be achieved. It is more preferable that the minimum distance (i.e., the clearance) between the distal end of the movable guide 16 and the concave rows 23a and 23b of the fiber array flat plates 22a and 22b where the fibers 1 from the movable guide 16 are arrayed is within a constant range of 0.1 to 2 mm.

After the second step has ended in this manner, a third step is performed in which the other fiber array flat plates 22a and 22b are stacked one by one on top of the fiber array flat plates 22a and 22b on which the fibers 1 have already been arrayed.

Namely, in the same way as in the first step, the positioning through holes 24a and 24b of the broad pitch flat plates 22b and the precise pitch flat plates 22a are fitted onto all of the broad pitch supporting columns 21b and precise pitch supporting columns 21a of the fiber winding bobbin 19, so that one each of the fiber array flat plates 22a and 22b is stacked onto each group of supporting columns 21a and 21b. At this point, a total of 24 of the fiber array flat plates 22a and 22b are placed on the circumference of the fiber winding bobbin 19.

Once the third step has ended in this manner, once again the second step is performed in which the fiber winding bobbin 19 is rotated and the movable guide 16 is moved additionally in the Z axial direction (i.e., upwards). The fibers 1 are then arrayed in sequence in the concave rows 23a and 23b of the newly positioned fiber array flat plates 22a and 22b. The third step is then again performed.

By repeating the above described second step and third step a predetermined number of times and ultimately stacking the fiber array flat plates 22a and 22b ten times on each group of supporting columns 21a and 21b so that the fibers 1 are arrayed in all of the concave rows 23a and 23b of the tenth layer of fiber array flat plates 22a and 22b, it is possible to array fibers in ten rows by ten layers. After fibers have been arrayed in the fiber array flat plates 22a and 22b of the tenth layer, fiber array flat plates 22a and 22b may be further mounted and stacked on the top thereof such that the fibers 1 do not become disengaged from the concave rows. Instead of mounting these fiber array flat plates 22a and 22b, it is also possible to mount holding plates that have an identical size and shape to the fiber array flat plates 22a and 22B apart from having no concave rows 23a and 23b formed therein.

By arraying fibers in ten rows by ten layers in this manner, a fiber wound object 30 can be obtained. In particular, the fiber wound object 30 of this example has six stacked objects 25 formed by the precise pitch flat plates 22a and six stacked objects 26 formed by the broad pitch flat plates 22b. In these, the array pitches of the fibers 1 that are arrayed in the fiber array flat plates 22a and 22b are different. Accordingly, the fibers 1 are arrayed at two different array pitches in a single fiber wound object 30. [Method of manufacturing a fiber array body]

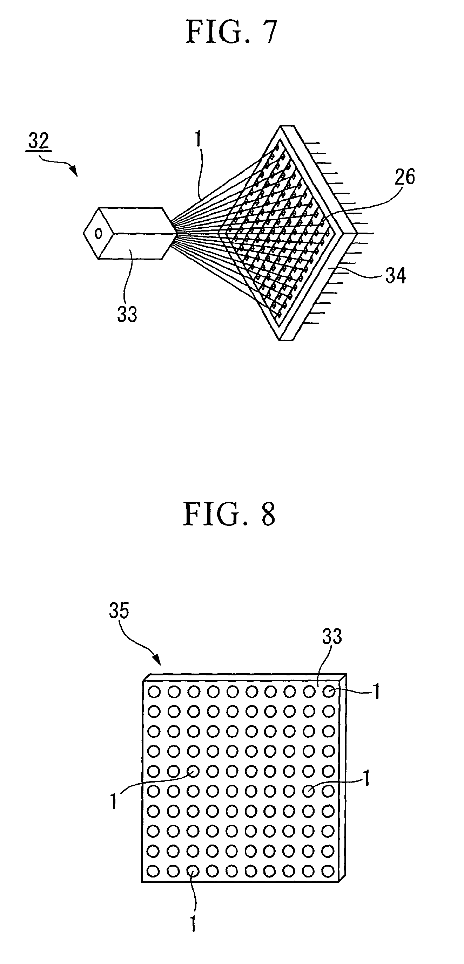

Next, a description will be given of a method of manufacturing two fiber arrayed bodies 32, such as that shown in FIG. 7, from the fiber wound object 30 shown in FIG. 6 that has been obtained using the above described method.

In this fiber array body 32, a portion of the fibers 2, which have been arrayed in ten rows by ten layers, that is arrayed on the precise pitch flat plates 22a (i.e., a portion 25' positioned between stacked objects 25 that are made up of the precise pitch flat plates 22a) is fixed in a block shape by a curable resin 33 with its array pattern being maintained. In contrast, the array pattern of the portion that is arrayed on the broad pitch flat plates 22b is maintained by the stacked objects 26 that are made up of the broad pitch flat plates 22b. Briefly (a more detailed explanation is given below), the portion of this fiber array body 32 that is fixed by the curable resin 33 is sliced in a direction that intersects the fibers 2, and, preferably, in a direction that is substantially perpendicular to the fibers 2 so as to form thin pieces. As a result, an organism related substance fixed microarray 35 such as that shown in FIG. 8 is obtained. Note that, in FIG. 7, the symbol 34 indicates a frame member. The stacked object 26 that is made up of the broad pitch flat plates 22b is fitted into this frame member 24 so that it does not fall apart.

One method of manufacturing this type of fiber array body 32 from the fiber wound object 30 shown in FIG. 6 is a method that uses a potting block to surround the ten rows by ten layers of the fibers 1 that are suspended between the stacked objects 25 that are made up of the precise pitch flat plates 22a.

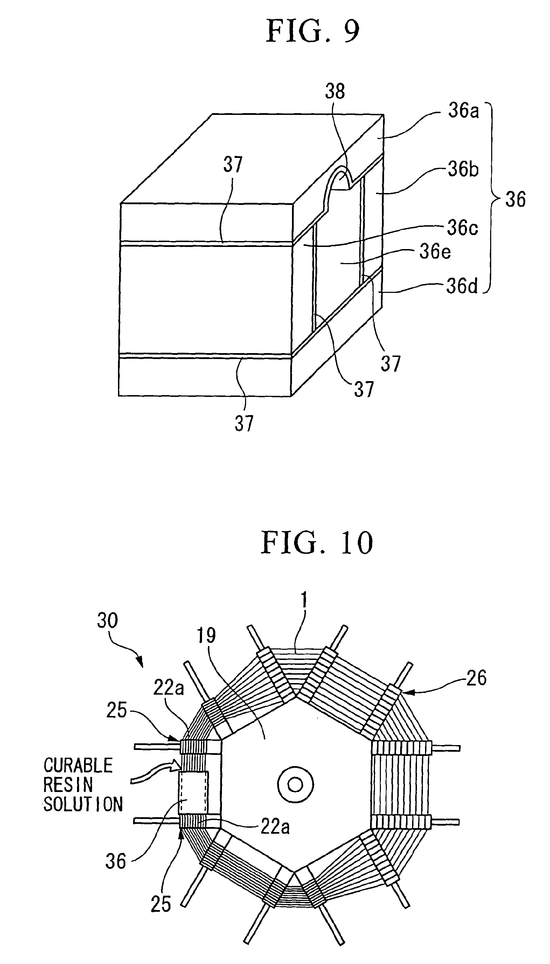

Preferably, the potting block that is used is formed in a cylindrical shape by combining together in the manner shown in FIG. 9 four plate-shaped block pieces 36a, 36b, 36c, and 36d that are made, for example, from a metal such as aluminum. Moreover, when these four pieces are combined together in a cylinder shape, it is preferable that mold release processing is performed by fixing a sheet-shaped material 37 that is formed from highly non-adhesive Teflon (registered trademark), polyethylene, polypropylene or the like on the surfaces of these four pieces that will form inner wall surfaces and on surfaces thereof where the block pieces will be in contact with each other. If this type of mold release processing is performed, then after a hollow portion 36e of the potting block 36 is subsequently filled with a curable resin solution which is then cured, the potting block 36 can be easily separated from the cured resin. Instead of performing this mold release processing on the block pieces 36a, 36b, 36c, and 36d, which are made of metal, it is also possible to form the potting block itself from a highly non-adhesive resin.

A semi-conical notch 38 that, in this example, becomes wider towards one end thereof is preferably formed in one surface of the inner wall surfaces of the cylindrical potting block 36. As is described below, this notch 38 then forms a filling aperture when the hollow portion 36e of the potting block 36 is later filled with a curable resin solution.

As is shown in FIG. 10, this potting block 36 is fixed so as to enclose the fibers 1 between the stacked objects 25 that are formed by the precise pitch flat plates 22a, and so that the one end of the potting block 36 where the filling aperture is not formed is in close contact with one of the stacked objects 25 of precise pitch flat plates 22a. At this time, a sealing member formed from silicon rubber or the like that has peelability and elasticity is interposed so that the curable resin solution that is supplied later does not leak out from the close contact portion between the potting block 36 and the stacked object 25.

After this, the end of the potting block 36 on the side where the filling aperture is formed (i.e., the aperture end) is positioned facing upward, and curable resin solution is poured into the hollow portion 36e of the potting block 36 through the filling aperture that is formed in the potting block 36. Subsequently, the potting block 36 is left undisturbed at a predetermined temperature for a predetermined length of time so that the supplied curable resin solution is able to harden.

Note that when filling the hollow portion 36e with the curable resin solution, it is preferable that the curable resin solution is stirred and degassed in advance in a vacuum. If it is degassed, there are no air gaps inside the resin after it has cured and the resin sufficiently permeates the space between the fibers 1. It is even more preferable if the curable resin solution is sufficiently degassed and if the above described resin filling task is conducted under reduced pressure.

After the curable resin solution with which the interior of the potting block 36 has been filled has cured, the potting block 36 is disassembled into the four block pieces 36a, 36b, 36c, and 36d. As a result, the fibers that have been arrayed precisely in ten rows by ten layers are fixed by resin in a block shape.

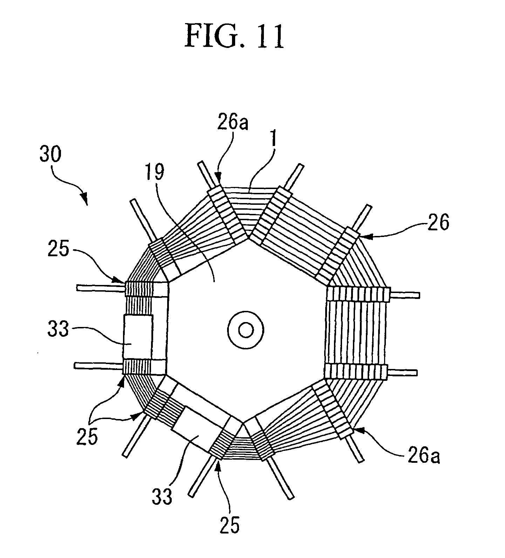

Moreover, in the same way as in the method described above, the fibers 1 between the stacked objects 25 formed by other precise pitch flat plates 22a in this fiber wound object 30 are also fixed using the curable resin 33 so that the state shown in FIG. 11 is obtained.

Thereafter, the fibers 1 arrayed in ten rows by ten layers in this fiber arrayed object 30 are appropriately cut open, and all of the precise pitch flat plates 22a are removed. Furthermore, by removing all of the broad pitch flat plates 22b other than the two stacked objects indicated by the symbols 26a in FIG. 11, two fiber arrayed bodies 32 in the state shown in FIG. 7 can be obtained.

Note that the type of curable resin 33 that is used here is preferably a curable resin solution that is in a low viscosity state at normal temperature and that is able to fill the hollow portion 36e of the potting block 36 and then cure at room temperature, and that after curing is able to be sliced easily by a cutter or the like into thin pieces having a uniform thickness. Furthermore, the obtained thin pieces should preferably have sufficient hardness and elasticity that they do not become chipped or broken. Examples of this type of curable resin 33 include two-liquid reaction curable resins such as urethane resins.

### [Fiber]

There is no particular restriction as to the type of fiber 1 that is arrayed and then fixed in the manner described above. Examples thereof include chemical fibers such as synthetic fibers, semisynthetic fibers, regenerated fibers, and inorganic fibers as well as natural fibers and composite fibers of these.

Representative examples of synthetic fibers include: various types of polyamide based fibers such as nylon 6, nylon 66, and aromatic polyamides; various types of polyester based fibers such as polyethylene terephthalate, polybutylene terephthalate, polylactic acids, and polyglycolic acids; various types of acrylic based fibers such as polyacrylonitrile; various types of polyolefin based fibers such as polyethylene and polypropylene; various types of polyvinyl alcohol based fibers; various types of polyvinylidene chloride based fibers; various types of polyvinyl chloride based fibers and polyurethane based fibers; phenol based fibers; fluorine based fibers such as polyvinylidene fluoride and polytetrafluoroethylene; polyalkylene paraoxybenzoate based fibers; fibers that use (meth)acrylic based resins such as polymethyl methacrylate; and fibers that use polycarbonate based resins.

Representative examples of semisynthetic fibers include: various types of fibers that are based on cellulose based derivatives that use diacetate, triacetate, chitin, or chitosan as a raw material; and various types of protein based fibers that are known as promix.

Representative examples of regenerated fibers include various types of cellulose based regenerated fibers such as rayon, cupra, and polynosic that are obtained using a viscose method, a copper - ammonia method, or an organic solvent method.

Representative example of inorganic fibers include glass fibers, and carbon fibers.

Representative examples of natural fibers include: vegetable fibers such as cotton, flax, ramie, and jute; animal fibers such as wool and silk; and mineral fibers such as asbestos.

These fibers 1 can be used as is appropriate in the manufacturing of the fiber arrayed bodies 32, however, as is described above, because tension is imparted to the fibers 1 when the fibers 1 are being arrayed, of the above described fibers polycarbonate based fibers, polyester based fibers, nylon based fibers, and aromatic polyamide fibers and the like that have a high modulus of elasticity and yield strength are preferably used.

Any fibers other than natural fibers that are obtained from a known fiber forming technology such as a melt spinning method, a wet spinning method, and a dry spinning method, or from a combination of these technologies can also be used.

Furthermore, unprocessed fibers may be used without any modification thereto for the fibers 1, however, if necessary, fibers into which a reactive functional group has been introduced may be used, or fibers that have undergone plasma processing or irradiation processing using γ-rays or electron beams or the like may be used.

Moreover, there is no particular restriction as to the form of the fibers 1, and they may be in monofilament form or in multifilament form. In addition, the fibers 1 may be formed by spun yarn obtained by spinning short fibers. The fibers 1 may also be hollow fibers or fibers having a porous structure. Hollow fibers can be manufactured using a known method that employs special nozzles.

There is no particular restriction as to the outer diameter of the fibers 1 and fibers 1 having the desired outer diameter can be used. However, if the outer diameter is too small, breakages tend to occur and there is a deterioration in the ease of handling. On the other hand, the smaller the outer diameter of the fibers 1, the higher the density at which the fibers 1 are able to be arrayed. Accordingly, the outer diameter of the fibers 1 is set so as to provide both ease of handling and the desired arrayed density. Preferably, the outer diameter of the fibers 1 is 500 µm or less, and more preferably 300 to 100 µm. If a multifilament fiber is used for the fibers 1, then 83 dtex/36 filament or 82 dtex/45 filament or the like can be used without any modification.

For example, a monofilament fiber having an outer diameter of 150 µm is used for the fibers 1 when the organism related substance fixed microarray 35 is being manufactured from the fiber array body 32. When this monofilament fiber is arrayed at an array pitch of 200 µm, the number of fibers 1 that can be arrayed inside a 1 cm² square is 2400. Accordingly, by fixing one type of organism related substance in one single fiber, it is possible to fix 2400 types of organism related substance in each square centimeter. Moreover, if monofilament porous fibers, monofilament hollow fibers or monofilament porous hollow fibers having an outer diameter of approximately 200 µm are arrayed at an array pitch of 200 µm, a fiber array body 32 in which approximately 1000 fibers 1 are arrayed in each square centimeter can be obtained. Accordingly, by fixing one type of organism related substance in one single fiber, it is possible to fix 1000 types of organism related substance in each square centimeter.

### [Method of manufacturing an organism related substance fixed microarray]

Next, a description will be given of a method of manufacturing the organism related substance fixed microarray 35 from a fiber array body 32 obtained in the manner described above.

Here, if fibers 1 are used in which an organism related substance has previously been fixed, then by slicing this fiber array body 32 into thin pieces in a direction intersecting the fibers 1, as is shown in FIG. 8, the fibers 1 in which organism related substance has been fixed are fixed by the curable resin 33, and thin slices of the organism related substance fixed microarray 35 can be obtained on both surfaces of which is exposed a cross-section of the fibers 1. The device used for slicing can be appropriately selected, and a microtome, laser, or the like can be used. The direction of the slices should be a direction that intersects the longitudinal direction of the fibers 1. Preferably, it should be a direction that is perpendicular to the longitudinal direction of the fibers 1.

If the organism related substance fixed in the fibers 1 is, for example, a nucleic acid, then by providing a specimen for the obtained organism related substance fixed microarray 100 and performing hybridization, it is possible to detect a specific nucleic acid array present in the specimen using the nucleic acid fixed to the fibers as a probe.

Note that if a multifilament fiber or spun yarn or the like is used for the fibers 1, then it is possible to fix organism related substance in the gaps between the fiber units. Moreover, if a hollow or porous fiber is used for the fibers 1, then it is possible to fix organism related substance in the hollow portions or in the gaps within the fibers 1.

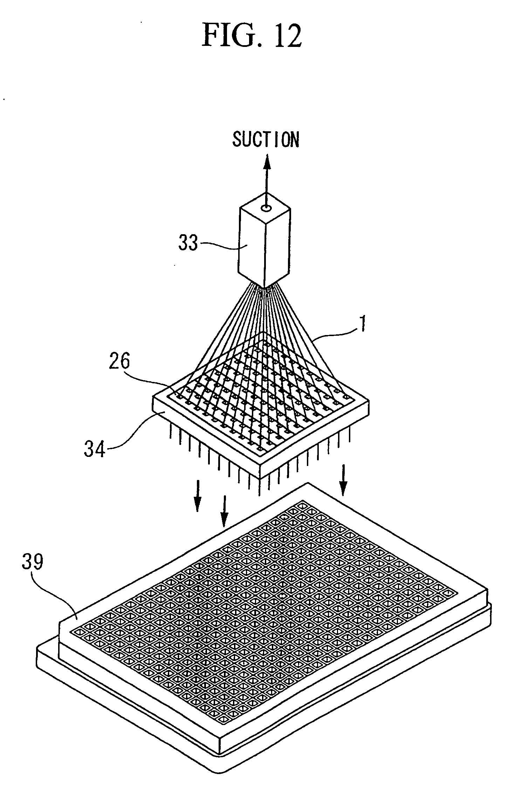

If, on the other hand, a porous fiber, a hollow fiber, or porous hollow fiber in which no organism related substance has been fixed is used for the fibers 1, then organism related substance can be fixed thereto using the method described below.
(1) A well plate 39 (see FIG. 12) is prepared having a liquid that contains organism related substance placed inside each block. One end portion of each of the fibers 1 on the side thereof where the array state is maintained by a frame member 34 and by a stacked body 26 made up of broad pitch flat plates 22b of the fiber array body 32 shown in FIG. 7 is inserted into each block.
(2) Next, by placing the other end of the fibers 1 in a reduced pressure state so as to suction the liquid, the liquid that contained the organism related substance is suctioned up into the hollow portions and porous portions of each of the fibers 1, and the organism related substance is introduced inside each of the fibers.

A commercially available well plate can be used for the well plate 39. At this time, if the array pitch of the fibers 1 in the broad pitch flat plates 22b has previously been made the same as the pitch of each block in the well plate 39, then it is possible to insert the end portion of each single fiber easily into each block.

Note that the type of organism related substance that is introduced into each fiber 1 may be different in every single one of the ten rows by ten layers of fibers 1. It is also possible to group together a plurality of fibers and introduce the same type of organism related substance into that group. If the types of organism related substance are all different from each other, it is possible to obtain an organism related substance fixed chip 35 in which 100 types of organism related substance has been fixed.

Examples of the organism related substance that is introduced into the fibers 1 in this manner include nucleic acids such as deoxyribonucleic acid (DNA), ribonucleic acid (RNA), peptide nucleic acid (PNA), and oxypeptide nucleic acid (OPNA) as well as proteins and polysaccharides.

If a nucleic acid is used as the organism related substance, the DNA or RNA from living cells may be prepared using a known method. For example, DNA may be extracted using Blin's method (see Blin et. Al., Nucleic Acids Res. 3: 2303 (1976)). RNA may be extracted using Favaloro's method (see Favaloro et. Al., Methods Enzymol. 65: 718 (1980)).

It is also possible to use chain or toroidal plasmid DNA or chromosome DNA, DNA pieces obtained by slicing these using restriction enzymes or by chemically slicing them, DNA that has been synthesized by enzymes in a test tube, or else chemically synthesized DNA. For example, DNA may be extracted using Blin's method (see Blin et. Al., Nucleic Acids Res. 3: 2303 (1976)). RNA may be extracted using Favaloro's method (see Favaloro et. Al., Methods Enzymol. 65: 718 (1980)).

These various organism related substance types may be used unmodified as they are, or they may be used in the form of derivatives in which the organism related substance has undergone chemical modification, or, if necessary, they may transformed and then used. For example, if a nucleic acid is used for the organism related substance, then amino formation, biotin formation, digoxigenin formation and the like, which are known as methods for chemically modifying organism related substance (Current Protocols in Molecular Biology, Ed. ; Frederick M. Ausubel et. al. (1990) and Deisotoping Experimental Protocols (1) DIG Hybridization (shuujunsha)), can be employed.

As the solution that contains these types of organism related substance, for example, an acrylamide aqueous solution that contains organism related substance into which an unsaturated functional group has been introduced is used. After this solution has been suctioned into the hollow portion or porous portion or the like of the fibers, as is described above, it is heated to 50 to 60 °C. As a result, a gel in which the organism related substance has been fixed to the gel network can be fixed to the hollow portion or porous portion.

As is described above, when fibers 1 are being arrayed three-dimensionally, the fiber array device 10 that is used is equipped with a fiber winding device 11 on which fiber is wound and a fiber supply device 12 that supplies the fibers 1 to the fiber winding device 11. The fiber supply device 12 is provided with a movable guide 16 that supplies fiber while moving relatively to the fiber winding device 11. The fiber winding device 11 has a fiber winding bobbin 19 that rotates around a shaft 19a while the fibers 1 are wound onto the circumference thereof, and fiber array flat plates 22a and 22b, a plurality of which are stacked respectively at a plurality of predetermined positions on the circumference of the fiber winding bulb in 19, and on whose respective external surfaces the fibers 1 are arrayed. As a result, the fibers 1 can be arrayed at a high density, with a high degree of accuracy, in a short time, and extremely efficiently, and it also becomes possible to mass produce the fiber array bodies 32 for industry. Namely, if this type of fiber array device 10 is used, it is not necessary to perform the complex task of inserting individual fibers through holes formed in a jig, as is the case conventionally. Moreover, because it is not necessary to guide the fibers being inserted into the holes using forceps or the like, the problem of fibers that have already being inserted into adjacent holes obstructing the operation when inserting fibers using forceps does not arise. In addition, because the operation is not one of inserting the fibers 1 into holes, but of arraying them in the concave rows 21, even if the outer diameter of the fibers is narrow and they have low rigidity, they can be arrayed easily so that a greater degree of density in the array of the fibers 1 becomes possible.

Namely, by using the fiber array device 10 that is described above, even if the outer diameter of the fibers 1 is small and they are difficult to handle, they can still be arrayed accurately at a high density and also efficiently in a short time, and mass production of the fiber arrayed bodies 32 becomes possible. As a result, it is also possible to mass produce organism related substance fixed microarrays 35 that enable a large variety of samples to be analyzed.

Moreover, in particular, the fiber array flat plates 22a and 22b have a plurality of concave rows 23a and 23b, in each one of which is arrayed a single fiber 1, formed substantially parallel to each other in an external surface thereof, and the fiber array flat plates 22a and 22b are stacked on the circumference of the fiber winding bobbin 19 so that the concave rows 23a and 23b are perpendicular to the shaft 19a of the fiber winding bobbin 19. As result, the fibers 1 can be arrayed more accurately and reliably.

Furthermore, by using the precise pitch flat plates 22a and the broad pitch flat plates 22b as the fiber array flat plates 22a and 22b, it is possible to easily obtain a fiber array body 32 at one end of which the fibers are arrayed at a precise array pitch, and at the other end of which the fibers are arrayed at an array pitch that is broader than this precise array pitch. If this type of fiber array body 32 is used, then, as is described above, it is also possible to easily introduce organism related substance to each fiber 1 using the well plate 39.

### [Examples]

The present invention will now be described specifically using examples.

### Example 1

A fiber array device 10 having the same structure as that shown in FIG. 1 was used apart from the fact that the broad pitch flat plates 22b shown in FIG. 4B were completely omitted and 120 of only the precise pitch flat plates 22a shown in FIG. 4A were provided, and apart from the fact that twelve groups (i.e., 24 altogether) of only the precise pitch supporting columns 21a were erected as fiber winding bobbins. Using this fiber array device 10, a fiber wound object in which polycarbonate hollow fibers having a diameter of 0.3 mm were arrayed in ten rows by ten layers was obtained.

Note that the movement speed in the X axial direction of the nozzle-shaped movable guide 16 was set at 12000 mm/minute, and the movement pitch was set at 0.42 mm, which was the same as the pitch between the concave rows 23a in the precise pitch flat plates 22a. 5 mN of tension was imparted by a tension imparting device to the hollow fibers that were arrayed in this manner. In addition, the minimum distance (i.e., the clearance) between the distal end of the movable guide 16 and the concave rows of the precise pitch flat plates 22a where the fibers 1 from the movable guide 16 were arrayed was set at a constant 0.5 mm. The revolution speed of the fiber winding bobbin 19 was set at 10 rpm. The inner diameter, outer diameter, and length of the nozzle-shaped movable guide 16 were set respectively at 0.4 mm, 0.7 mm, and 12 mm.

As a result, in approximately one hour of working time, a fiber wound object in which fibers 1 were accurately arrayed in ten rows by ten layers was obtained.

### Example 2

Using the fiber array device 10 shown in FIG. 1, a fiber wound object 30 such as that shown in FIG. 6 in which polycarbonate hollow fibers having a diameter of 0.3 mm were arrayed in ten rows by ten layers was obtained.

Note that the movement speed in the X axial direction of the nozzle-shaped movable guide 16 was set at 12000 mm/minute. The movement pitch was set at 0.42 mm for the precise pitch flat plates 22a, which was the same as the pitch between the concave rows 23a in the precise pitch flat plates 22a, and was set at 4.5 mm for the broad pitch flat plates 22b, which was the same as the pitch between the concave rows 23b in the precise pitch flat plates 22b. 5 mN of tension was imparted by a tension imparting device to the hollow fibers that were arrayed in this manner. In addition, the minimum distance (i.e., the clearance) between the distal end of the movable guide 16 and the concave rows 23a and 23b of the fiber array flat plates 22a and 22b where the fibers from the movable guide 16 were arrayed was set at a constant 0.5 mm. The revolution speed of the fiber winding bobbin 19 was set at 10 rpm.

As a result, in approximately one hour of working time, a fiber wound object 30 in which the fibers 1 were arrayed in ten rows by ten layers at two different array pitches in the same fiber arrayed object 30 was obtained.

### Example 3

A potting block 36 such as that shown in FIG. 9 was placed in two locations on portions sandwiched between two stacked objects 25 of the precise pitch flat plates 22a in the fiber wound object 30 obtained in Example 2. As is shown in FIG. 10, a polyurethane elastomer (coronate 4403/nippolan 4276 mixed in a proportion of coronate 6: nippolan 4) solution was then poured into the interior of the hollow portion and hardened so that the state shown in FIG. 11 is obtained. Thereafter, the fibers 1 were cut open and the fiber array flat plates 22a and 22b were appropriately removed. As a result, two block-shaped fiber arrayed bodies 32 in which the fibers 1 were accurately arrayed in the manner shown in FIG. 7 were prepared from a single fiber wound object 30. The required working time was approximately one hour up until the pouring of the resin solution.

### Example 4

A fiber wound object 30 such as that shown in FIG. 6 was obtained in which the fibers 1 were arrayed in the same manner as in Example 1 except for the fact that the torque motor 28 of the tension imparting device 27 was not operated and for the fact that the above described clearance was 3 mm.

### Example 5

A fiber wound object 30 such as that shown in FIG. 6 was obtained in which the fibers 1 were arrayed in the same manner as in Example 1 except for the fact that the fibers 1 were supplied without being passed through the tensioner 29 of the tension imparting device 27.

### Example 6

A fiber wound object 30 such as that shown in FIG. 6 was obtained in which the fibers 1 were arrayed in the same manner as in Example 1 except for the fact that the clearance was set to 10 mm.

### Example 7

A fiber wound object 30 such as that shown in FIG. 6 was obtained in which the fibers 1 were arrayed in the same manner as in Example 1 except for the fact that, instead of concave rows, an adhesive layer made up of a vinyl acetate based adhesive agent was formed on the precise pitch flat plates. Thereafter, resin fixing was performed on the fibers 1 in the same way as in the above described Example 3 so that two block-shaped hollow fiber arrayed resin bodies were prepared.

According to each of the above described examples, it is possible to array fibers accurately in a short length of time. In particular, according to Examples 1 to 3, a particularly accurate fiber array is possible. Moreover, in Example 3, an excellent fiber array body was obtained in which the fibers remained fixed in this state.

In contrast, in Examples 4 and 6, the array state of the fibers was somewhat inferior compared to that of Examples 1 to 3. In Example 5, there was a tendency for considerable stress to be placed on the fibers when the movable guide 16 was being moved.

### Comparative Example 1

For the fiber array jig two stainless steel porous plates having a thickness of 0.1 mm were used in which a total of 49 holes having a diameter of 0.32 mm were prepared at a pitch of 0.42 mm using a photoetching method in seven rows horizontally and seven rows vertically. 49 lengths of polycarbonate hollow thread (having an outer diameter of 0.3 mm × a length of 1 m) were inserted into all of the holes in the porous plates, and a gap of 50 mm was set between the two porous plates.

Next, the hollow threads between the two porous plates that were arrayed in this manner were placed inside a potting jig. The same polyurethane elastomer (i.e., coronate 4403/nippolan 4276) as that used in Example 3 was then poured into the space enclosed by the porous plates and the potting jig. As a result, a hollow thread arrayed body was formed in a block shape whose vertical, horizontal, and height dimensions were 20 mm × 20 mm × 50 mm respectively. The working time was approximately six hours up until the pouring of the resin solution.

Next, a detailed description will be given of the fiber array jig of the present invention and of a method of manufacturing a fiber array body using this jig.

### [Fiber array jig]

The fiber array jig of the present invention is used in order to array a plurality of fibers three-dimensionally, and a fiber array body is obtained by fixing the three-dimensionally arrayed fibers in this state.

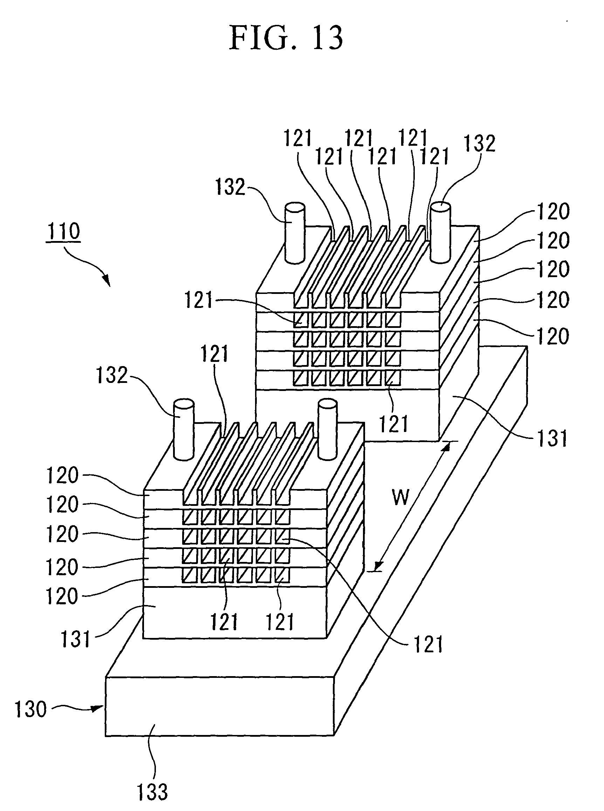

FIG. 13 is a perspective view showing an example of a fiber array jig 110.

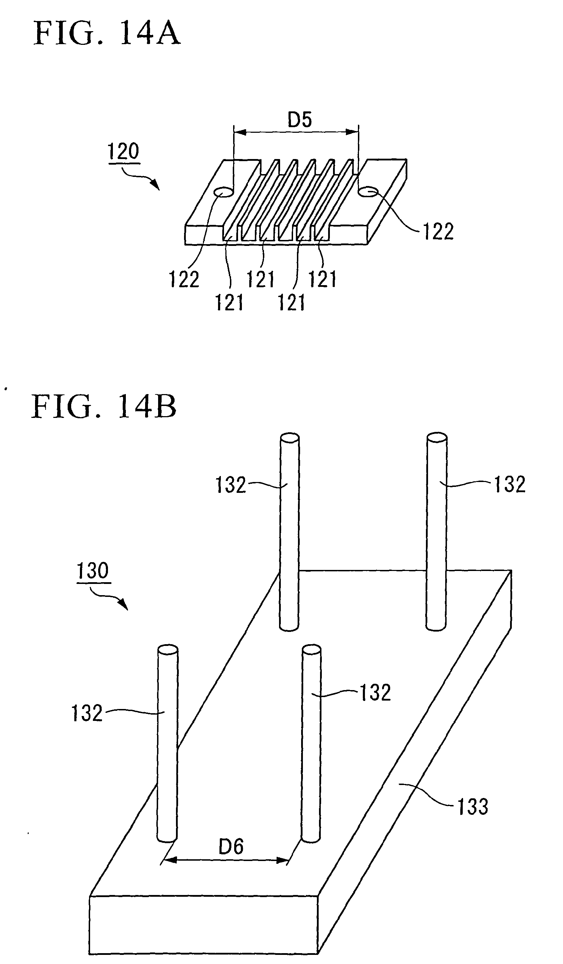

As is also shown in FIGS. 14A and 14B, this fiber array jig 110 has ten fiber array flat plates 120 that are made up of rectangular flat plates, and six concave rows 121, in each one of which is arrayed a single fiber, are formed substantially parallel with each other in one surface of these fiber array flat plates 120. The fiber array jig 110 also has a positioning jig 130 for accurately positioning the fiber array flat plates 120 in predetermined positions.

As is shown in FIG. 14A, one circular positioning through hole (indicated by the symbols 122) is formed in the vicinity of both ends of each of the fiber array flat plates 120 of this example. In contrast, as is shown in FIG. 14B, the positioning member 130 is formed by a base 133 in the form of a rectangular flat plate, and two groups (with two columns in each group) of supporting columns 132 (to make a total of four) that stand vertically relative to the base 133. A spacing D₅ between the two positioning through holes 122 that are formed in each of the fiber array flat plates 120 is formed so as to be the same as a spacing D₆ between each group of the supporting columns 132 that are erected on the base 133. In addition, the outer diameter of the supporting columns 132 is formed slightly smaller than the inner diameter of the positioning through holes 122 so that a sufficient clearance is provided. As is shown in FIG. 13, by inserting the supporting columns 132 into the positioning through holes in the respective fiber array flat plates 120, each of the fiber array flat plates 120 can be accurately placed in a predetermined position.

Namely, in the fiber array jig 110 of this example, as is shown in FIG. 13, using the positioning member 130, two fiber array flat plates 120 can be placed on the base 133 such that the concave rows 121 that are formed in the fiber array flat plates 120 are placed in alignment with each other, and such that a predetermined spacing W is provided between them. Furthermore, by stacking other fiber array flat plates 120 on top of the fiber array flat plates 120 that are already placed on the base 133, ultimately, two groups can be stacked having five layers of the fiber array flat plates 120 in each group.

Accordingly, by arraying one fiber in each of the concave rows 121 of each fiber array flat plate 120 (described below in detail), according to this fiber array jig 110, fibers can be arrayed in five layers with each layer having six rows.

Note that the symbol 131 in the drawings indicates a spacer that is formed by a rectangular plate the same shape as the fiber array flat plates 120. Two circular positioning through holes are formed in the vicinity of both ends thereof. The spacers 131 are positioned using the positioning members 130 by the same method as that employed for the fiber array flat plates 120. The spacers 131 can be used if necessary, and spacers 131 having the desired thickness can be used as is appropriate in accordance with the thickness of the potting block that is used in the fiber fixing process (described below in detail).

Here, the width and depth of the concave rows 121 formed in the fiber array flat plates 120 can be appropriately set in accordance with the outer diameter of the fibers that are arrayed in the concave rows 121. When the cross-sectional configuration in the vertical direction of the concave rows 121 relative to the lengthwise direction is rectangular, as is the case in this example, it is preferable that the width and depth are within a range of 100 to 125% of the size of the outer diameter of the arrayed fibers. If the width and depth are this size, then the fibers can be arrayed without protruding from the concave rows 121. Furthermore, in order to make it easier to accurately array fibers and from the viewpoint of work efficiency when inserting fibers in the concave rows 121, it is most preferable that the width and depth of the concave rows 121 is approximately 110% of the size of the outer diameter of the fibers. If the concave rows 121 have uniform dimensions and are deep enough for the fibers not to protrude and for the fibers to be easily inserted therein, then the cross-sectional configuration thereof is not limited to the rectangular configuration shown in the examples in the drawings. Bottom portions of the concave rows 121 may also be formed having a curved surface shape to follow the external contour of the fibers (i.e., in a U shape), or in a trapezoidal shape or V shape.

The material used to form the fiber array flat plates 120 is not particularly limited, however, a metal is preferable. In particular, a stainless steel based spring steel is preferably used as the metal from the viewpoint of its anti-corrosion properties and its strength.

The method used to manufacture the fiber array flat plates 120 only needs to involve preparing a flat, metal plate and then forming concave rows in one surface thereof. Methods that may be used to form the concave rows in the flat, metal plate include: 1) a method in which the concave rows 121 are formed one at a time by machining; 2) a method in which a plurality of concave rows 121 are carved out and formed simultaneously using a special edged tool; 3) and a method in which the concave rows 121 are formed by etching. In addition to these, 4) another method may be used in which flat, metal plates (a) having the same thickness as the depth of the concave rows 121 being formed are prepared, and are then processed in a lattice configuration by etching. The bar portions forming the lattice of the lattice-shaped member that is obtained only are then bonded to another flat, metal plate (b), and by then cutting the bar portions protruding from the flat, metal plate (b), concave rows 121 having the same depth as the thickness of the flat, metal plates (a) being used are formed.

Among these methods, on methods 1) and 2), because the concave rows 121 are formed by machining, when forming particularly detailed concave rows 121, care must be taken that there are no dimensional changes caused by heat from the machining and no bending caused by residual stress from the machining, and also that there are no changes in the width or depth of the concave rows 121 caused by wearing of the cutting edge. In addition, although in the method based on etching there are no problems with dimensional changes or bending such as those that may be recognized in methods 1) and 2), it is still necessary to control the depth of the concave rows 121 by the etching conditions. As a result, it is necessary for the etching conditions to be suitably set or regulated. Accordingly, method 4) is preferable as the method for forming the concave rows 121 because precise concave rows 121 can be formed without the etching conditions needing to be set and regulated as strictly as in method 3).

In this method 4), the method used to bond the lattice member to the flat, metal plate (b) may be a bonding method using an adhesive agent, or may be a method in which a thin film of a metal that will become a binder is formed on a bonding surface of the lattice member or flat, metal plate (b), and the two are then bonded together by applying heat and pressure. However, if an adhesive agent or binder is used, there is a possibility of unevenness being generated in the thickness of the concave rows 121 due to unevenness in the thickness of the binder or adhesive agent. There is also a possibility of the concave grooves being narrowed due to excess binder or adhesive agent spreading from the bonding surface into the concave rows 121, and a possibility of bending occurring that is caused by a bimetal effect generated by any difference in the coefficients of thermal expansion of the materials. Accordingly, in order to obviate these possibilities, it is preferable that the same material is used to form the lattice member and the flat, metal plate (b), and that these are bonded together using solid phase diffusion bonding in which the metal structures are integrated and bonded together by applying heat and pressure to the lattice member and the flat, metal plate (b) in a vacuum.

Note that, as is described above, a metal such as a stainless steel based spring steel is preferably used as the material of the fiber array flat plates 120, however, provided that sufficient strength and dimensional accuracy are ensured, it is also possible to use a thermoplastic synthetic resin, a thermosetting synthetic resin, a photocurable synthetic resin or the like. In this case, a method may be used in which these resins are molded by press molding or injection molding using a precise metal mold so as to form the fiber array flat plates 120. According to this type of molding method, identical fiber array flat plates 120 can be manufactured in large quantity and at low cost.

There is also no particular restriction as to the material of the positioning member 130, however, it is preferable that stainless steel or the like that has excellent strength and rust resistance is used.

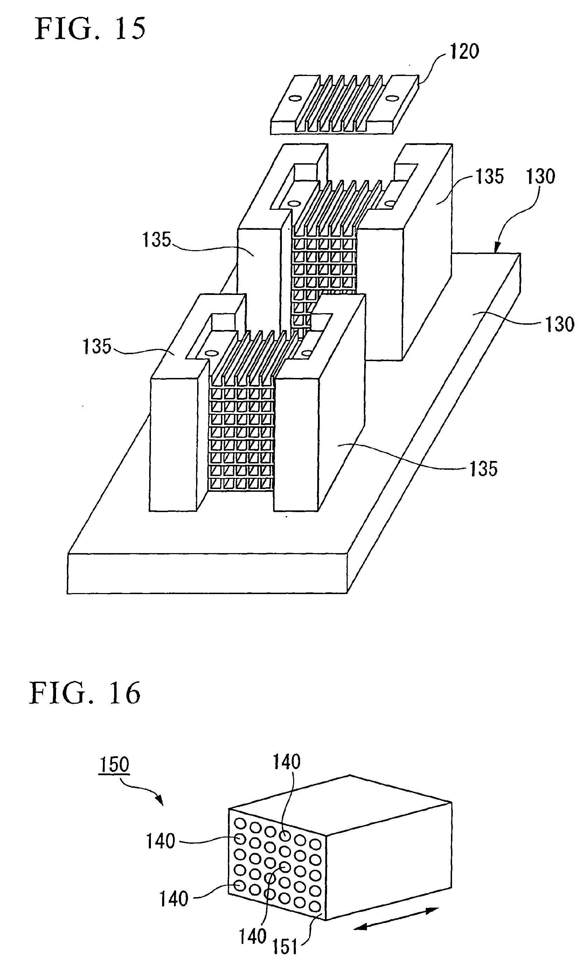

Note that, in the fiber array jig 110 shown in FIG. 13, as is described above, by fitting the supporting columns 132 of the positioning member 130 together with the positioning through holes 122 of the respective fiber array flat plates 120, the placement positions of the plurality of fiber array flat plates 120 can be decided specifically and accurately. According to this type of positioning mechanism, positioning can be achieved with a high degree of accuracy using a simple structure. However, there are no restrictions on the positioning mechanism provided that the fiber array flat plates 120 can be positioned specifically and accurately. For example, as is shown in FIG. 15, a positioning member that has guide members 135 having a ⊐-shaped horizontal cross section standing on the flat, rectangular plate-shaped base 133 instead of supporting columns can be used as the positioning member 130. In the positioning member 130 shown in FIG. 15, two groups are provided with each group formed by two ⊐-shaped guide members 135 positioned facing each other. The fiber array flat plates 120 are placed or stacked between the guide members 135 of each group. As a result, the placement positions of a plurality of fiber array flat plates 120 can be decided specifically and accurately.

Moreover, in the fiber array jig 110 shown in FIGS. 13 to 14B, six of the concave rows 121 are formed in each fiber array flat plate 120, and these fiber array flat plates 120 are stacked in five layers. As a result, it is possible to array a total of 30 fibers. The number of concave rows 121 that are formed in each single fiber array flat plate 120 as well as the number of layers of stacked fiber array flat plates 120 is not restricted provided that there are a plurality of each, and can be set to desired numbers. Preferably, the number of concave rows 121 formed in each fiber array flat plate 120 is in a range of 6 to 100, and more preferably in a range of 10 to 100. The number of layers of stacked fiber array flat plates 120 is preferably in a range of 5 to 100, and more preferably in a range of 10 to 100.

Moreover, it is also possible to change the number of fibers that are arrayed in each layer by varying the number of concave rows 121 that are formed in each fiber array flat plate 120 of the respective layers.

Furthermore, there is no particular restriction as to the spacing W between two fiber array flat plates 120 that are placed such that the concave rows 121 that are formed in each fiber array flat plate 120 are placed in alignment with each other, and this spacing W can be set as is appropriate. Here, if the spacing W is set as a large spacing, then an elongated product can be obtained as the fiber array body that is ultimately obtained. If an elongated product is obtained, then when the fiber array body is sliced into thin pieces in a direction intersecting the fibers and an organism related substance fixed microarray is being manufactured, a large number of organism related substance fixed microarrays can be obtained from a single fiber array body, which is advantageous as regards manufacturing costs. However, the larger the spacing W, the more difficult it becomes to strictly control the array state of the fibers between the two fiber array flat plates 120. Accordingly, it is preferable that the spacing W is suitably set in consideration of these viewpoints.

Furthermore, in the fiber array jig 110 of this example, firstly, two fiber array flat plates 120 are positioned and then the other fiber array flat plates 120 are each stacked on top of these two plates. As a result, two groups of stacked fiber array flat plates 120 are formed. It is also possible for three or more fiber array flat plates 120 to be placed in position and for each of the other fiber array flat plates 120 to be stacked on top of these so that three or more groups of stacked fiber array flat plates 120 are formed provided that the fiber array flat plates 120 are positioned with a predetermined spacing between each such that the concave rows 121 that are formed in each fiber array flat plate 120 are in alignment with each other. For example, if N number of groups of stacked fiber array flat plate 120 are being formed, the fiber array objects can be manufactured as N-1 groups, and it is necessary for the two supporting columns 132 for each group that are provided on the positioning member 130 to be two supporting columns 132 for N groups.

### [Method of manufacturing a fiber array body]

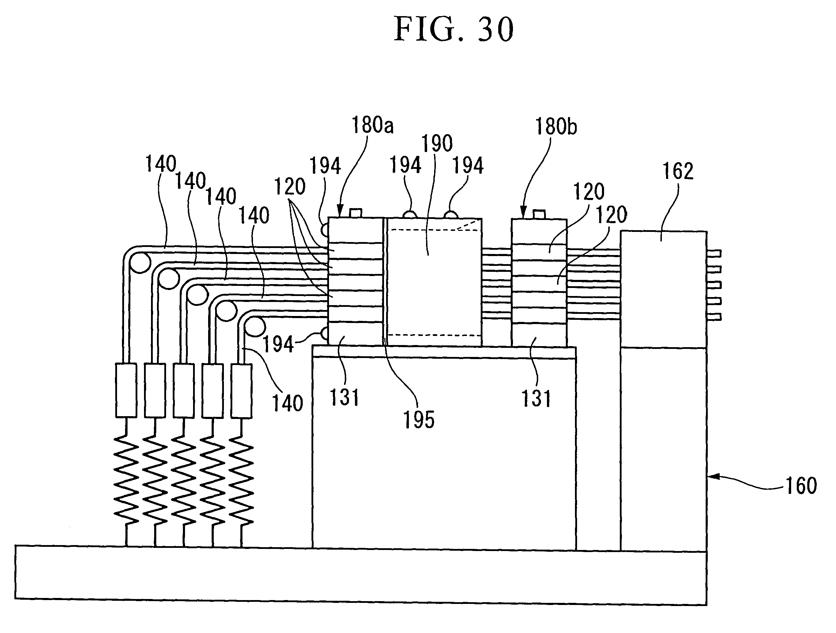

Next, a description will be given of a method of manufacturing a fiber array body 150 (see FIG. 16) in which 30 fibers are fixed while being arrayed three-dimensionally. This fiber array body 150 is obtained by performing a fiber array step in which 30 fibers are arrayed three-dimensionally using the fiber array jig 110 shown in FIG. 13, and by then performing a fiber fixing step in which these fibers are fixed while being in a three-dimensionally arrayed state. In the fiber array body 150 shown in FIG. 16, 30 fibers 140 are inserted substantially in parallel with each other in the direction shown by the arrows.

The symbol 151 indicates a curable resin, and the 30 fibers are fixed with the spacing between each maintained by this resin.

### (Fiber array step)

Two specific embodiments can be preferably illustrated for the fiber array step. Firstly, a first embodiment will be described.

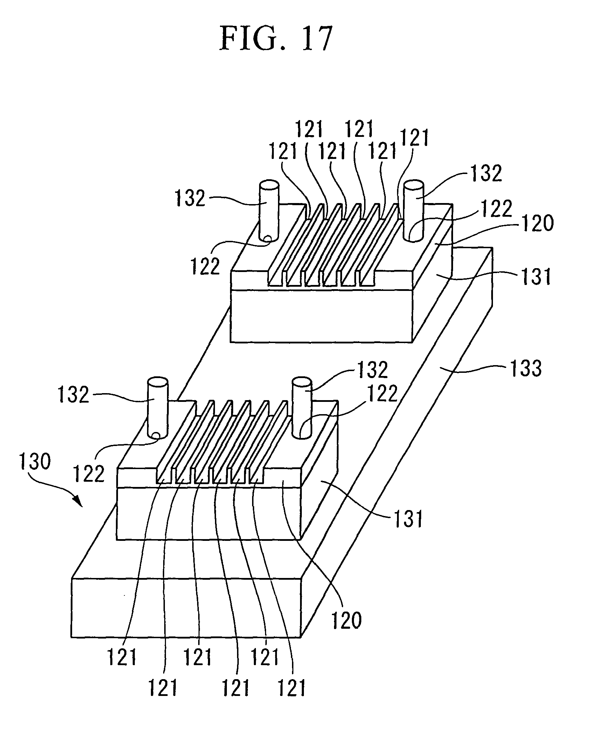

In the first embodiment, firstly, as is shown in FIG. 17, the positioning through holes of the respective spacers 131 are fitted onto the two groups of supporting columns 132 of the positioning member 130 shown in FIG. 14B, and the two spacers 131 are put in position. Next, two fiber array flat plates 120 are prepared, and the positioning through holes 122 in each are fitted respectively onto the two groups of supporting columns 132 of the positioning members 130. The two fiber array plates 120 are thus positioned with a predetermined spacing between them such that the respective concave rows 121 that are formed in the two fiber array flat plates 120 are in alignment with each other. The above process makes up a first step.

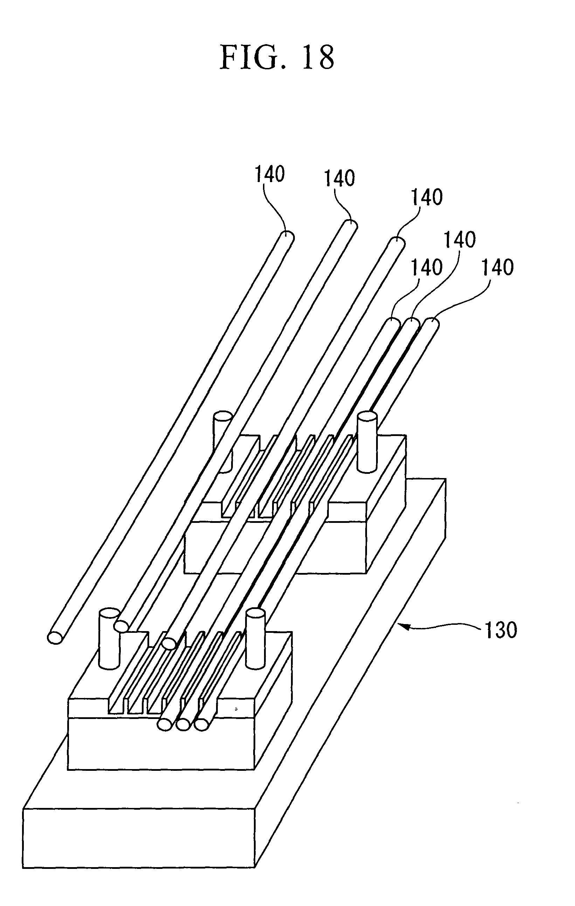

Next, as is shown in FIG. 18, a second step is performed in which six fibers 140 are arrayed individually so as to span the aligned concave rows 121, namely, such that the fibers 140 do not cross each other or overlap each other.

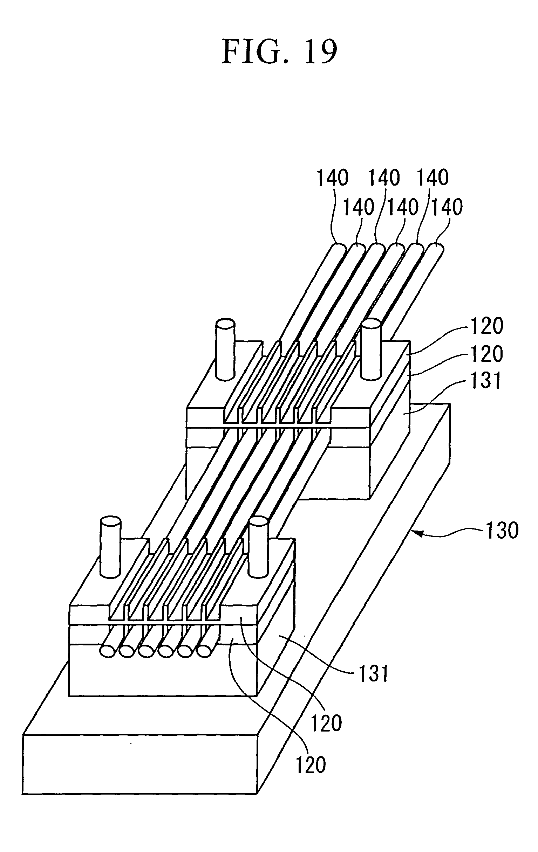

Thereafter, a third step is performed in which, as is shown in FIG. 19, other fiber array flat plates 120 are stacked respectively on top of the two fiber array flat plates 120 that have been positioned by the positioning member 130 and in whose concave rows 121 individual fibers 140 have been arrayed.

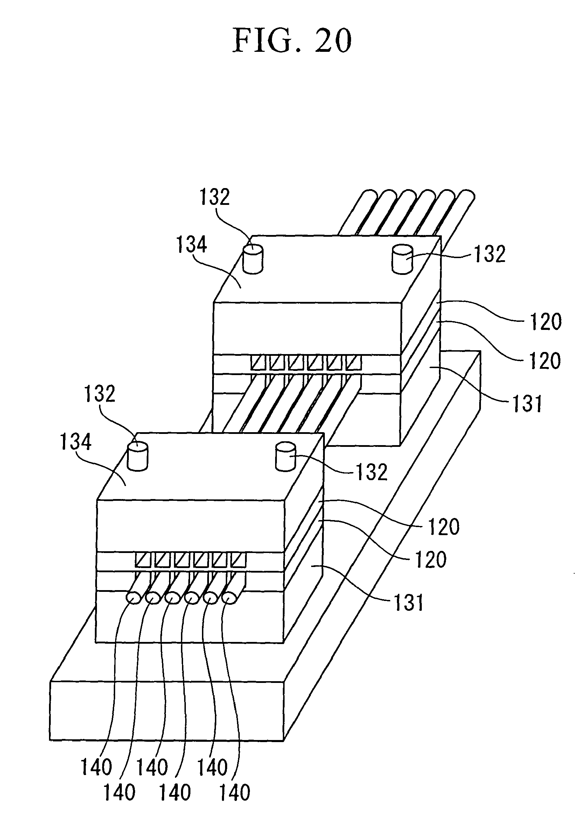

It is also possible to follow this third step with a fourth step in which tension is imparted to each of the arrayed fibers 140, however, prior to this, as is shown in FIG. 20, it is preferable that a temporary fixing step is performed in which, by further stacking weight members 134 thereon, the tight contact between the first layer (i.e., the bottom most layer) of fiber array flat plates 120 and the second layer of fiber array flat plates 120 on top of the first layer is maintained.

If this type of temporary fixing is performed, the six arrayed fibers 140 do not spring out of the concave rows 121, so that the subsequently performed fourth step can be performed stably and the work efficiency is improved.

Namely, the weight members 134, which are heavy objects, are each placed on the stacked fiber array flat plates 120. At this time, it is preferable that flat objects such as those shown in the drawings that have positioning through holes formed in the vicinity of both ends thereof and are able to be positioned using the supporting columns 132 are used for the weight members 134, as this prevents the weight members 134 from being mispositioned or falling off.

The fourth step is a step in which tension is imparted to each of the arrayed fibers 140, and is intended to prevent the fibers 140 from being fixed in a sagging state in the fiber fixing step that is performed after the fiber array step. Note that the size of the tension that is imparted here is within a range whereby the fibers 140 are not elastically deformed or broken.

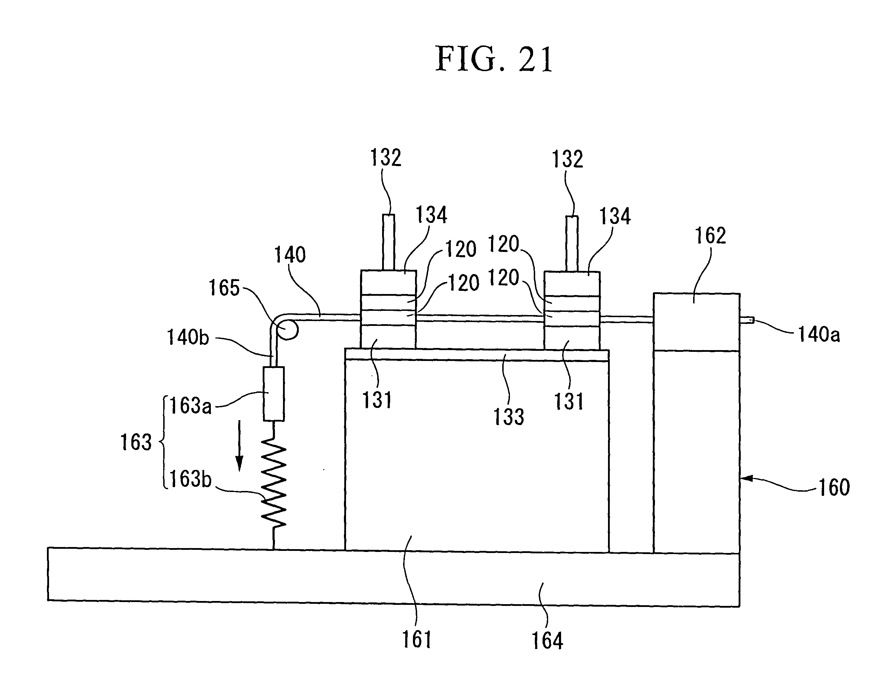

An example of a method used to impart and maintain the tension to the fibers 140 is a method that uses a tension imparting device 160 such as that shown in FIG. 21.

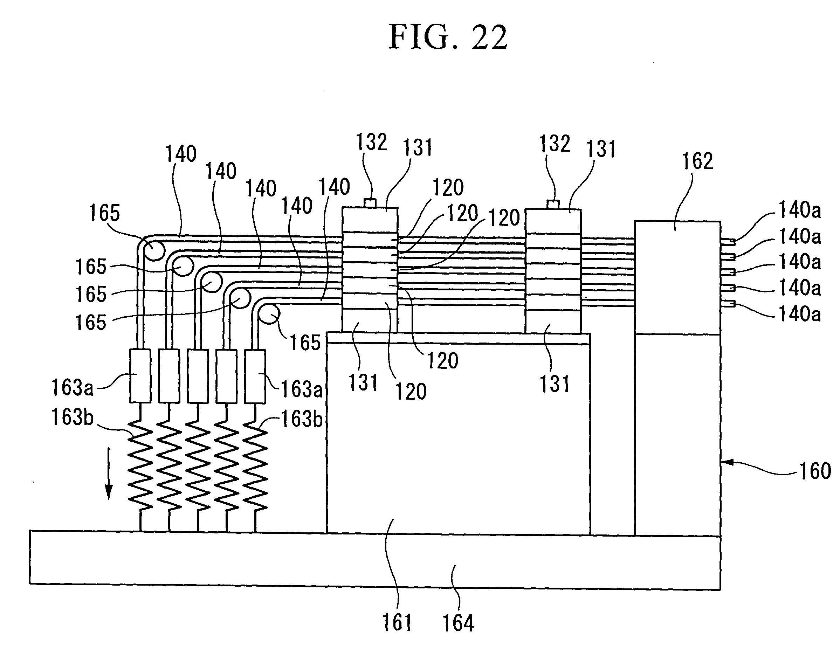

This tension imparting device 160 is provided with a placement base 161 on which the positioning members 130 are placed and fixed, a fiber fixing section 162 that fixes one end 140a of the arrayed fibers 140, and a fixing jig 163 that fixes while pulling the other end 140b of the fibers 140. The fixing jig 163 is provided with a holding member 163a such as a clamp that holds the other end 140b of the fibers 140, and an elastic body 163b such as a spring or a rubber member that is connected to the holding member 163a. The elastic body 163b can be fixed to a flat plate 164 on which the placement base 161 is mounted, and this enables the fibers 140 to be maintained in a tensioned state. Note that, in FIG. 21, the symbol 165 indicates a guide member in the form of a round bar. This guide member 165 enables the direction in which the fibers 140 are pulled by the fixing jig 163 to be changed in a 90 degree downward direction, as is shown in FIG. 21. Accordingly, as is also shown in FIG. 22, even if four layers of fibers 140 are later arrayed and tension is imparted to each of the fibers 140, it is still easy to secure a compact space on the base 164 for fixing the elastic bodies 163b.

Furthermore, here, it is preferable that the heights of the tops of the guide members 165 are slightly lower than the heights of the bottom portions of the concave rows 121 formed in the fiber array flat plates 120, so that not only is tension imparted in the longitudinal direction of the fibers 140 to each of the arrayed fibers 140, but so that force is also acting in a direction in which the fibers 140 are pressed downwards onto the bottom portions of the concave rows 121. By employing a structure such as this, tension is imparted to each fiber 140 to prevent each fiber from coming loose, and the fibers 140 can be prevented from springing out of the concave rows 121 even if the topmost layer of fiber array flat plates 120 or the weight members 134 are removed.

The fourth step is performed in this manner, so that the state shown in FIG. 21 is obtained. As a result, the tasks of arraying the fibers 140 of the first layer in predetermined positions and imparting tension thereto are ended.

If the temporary fixing step using the weight members 134 is performed, after the two weight members 134 have been removed, the above described second step, namely, a step in which the fibers 140 are arrayed individually so as to span the aligned concave rows 121 is performed for the concave rows 121 of the second layer of fiber array flat plates 120. Thereafter, by again performing the third step in the same manner, the temporary fixing step, if this is necessary, and the fourth step, the second layer of fibers 140 can be arrayed in predetermined positions.

Note that, in the arraying operation for each layer, it is also possible after the fourth step has ended to perform a fiber bonding step in which adhesive agent is put into the gaps between the already tensioned fibers 140 and the concave rows 121 where these tensioned fibers 140 are arrayed so as to bond the respective fibers to the concave rows 121. This type of fiber bonding step can also be performed for the respective fibers 140 and the concave rows 121 of both of the fiber array flat plates 120 of each layer, however, it is preferable that the other end 140b side of the fibers 140 that are fixed by the fixing jig 163 is bonded to the concave rows of the fiber array flat plates 120. The adhesive agent that is used here is preferably one that can be easily removed later from the fiber array flat plates 120, and examples thereof include aqueous vinyl acetate based adhesive agents. By bonding the other end 140b side of the fibers 140 that are fixed by the fixing jig 163 to the concave rows of the fiber array flat plates 120, when the work of inserting the curable resin solution is performed in the subsequent fiber fixing step, resin solution can be prevented from leaking from this bond portion.

In this manner, by repeating each of the above steps, the fibers 140 are arrayed as far as the fifth layer, and the state shown in FIG. 22 in which tension is imparted to all of the fibers 140 is obtained. Note that after the fifth layer, namely, the topmost layer of the fibers 140 has been arrayed, then if another fiber array flat plate is to be placed on top thereof (i.e., in the third step), it is possible to stack spacers 131 in which no concave rows have been formed instead of the fiber array flat plate. A spacer 131 having sufficient strength is used for this topmost stacked spacer 131, and the 5 stacked layers of fiber array flat plates 120 are sandwiched by this spacer 131 and the base 133 of the positioning member 130. It is preferable if these are then fastened with bolts or screws so that the stacked state of the stacked fiber array flat plates 120 is maintained even in the subsequent fiber fixing step and the fiber array is not disturbed. Namely, it is preferable if the spacers 131 are used as presser plates. Moreover, instead of the spacers 131 that are stacked on the topmost layer as presser plates in this manner being fixed to the base 133 of the positioning member 130, they can also be fixed to the spacers 131 beneath the first layer of fiber array flat plates 120 provided that the stacked state of the stacked fiber array flat plates 120 is fixed.

In the above description, the third step to stack other fiber array flat plates 120 is performed after the second step to array fibers 140 and prior to the fourth step to impart tension to these fibers 140. However, after the second step, it is also possible to perform the third step after the fourth step has been performed. In this case, it is preferable that, prior to the fourth step, weight members 134, such as those used in the temporary fixing step described above, whose contact surface with the fiber array flat plates 120 is a flat surface are used to prevent the respective fibers 140 from springing out from the concave rows 121 during the fourth step.

Next, the second embodiment of the fiber array step will be described.

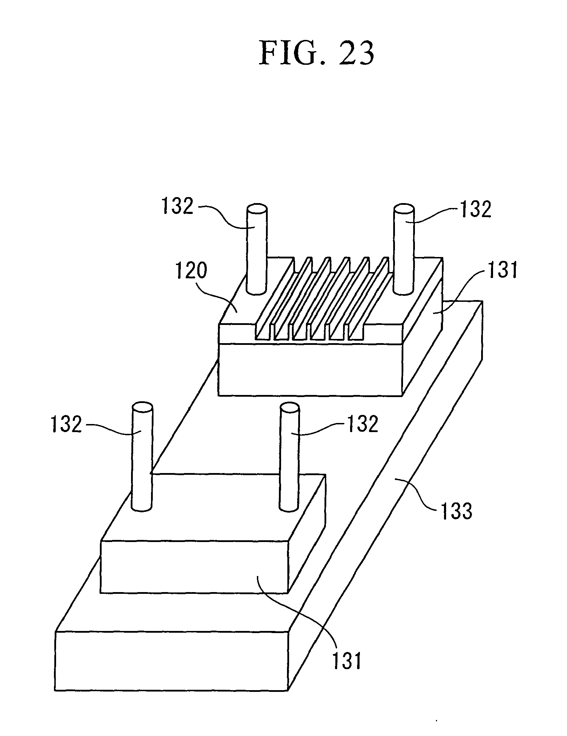

In the second embodiment as well, firstly, as is shown in FIG. 23, the positioning through holes of two spacers 131 are fitted respectively onto the two groups of supporting columns 132 of the positioning member 130, and the spacers 131 are put in position. Next, one fiber array flat plate 120 is prepared, and the positioning through holes 122 therein are fitted onto one group of the supporting columns 132 of the positioning member 130. The fiber array plate 120 is thus positioned in a predetermined position. The above process makes up a first step.

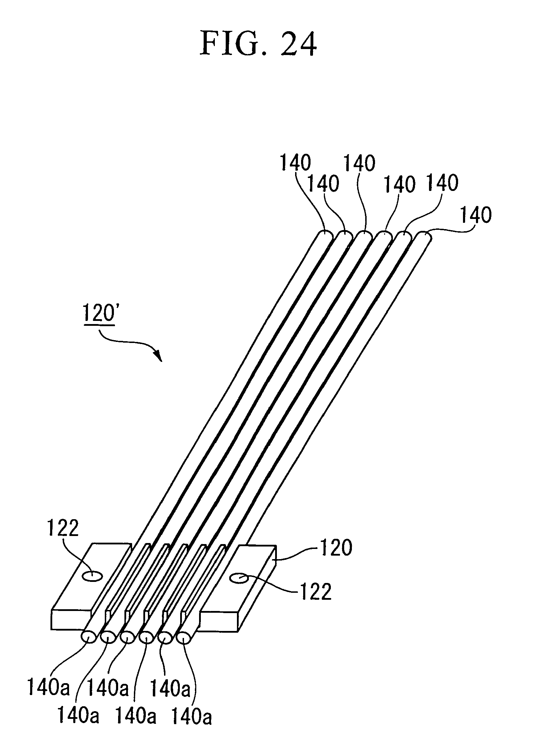

Next, a second step is performed in which one other fiber array flat plate 120 is prepared, and one end 140a of each fiber 140 that has been cut to a predetermined length is arrayed individually in concave rows 121 and bonded, as is shown in FIG 24, so that a fiber array flat plate 120' on which the fiber bonding has already been completed is manufactured.

Here, the method used to bond the fibers 140 in the concave rows 121 is preferably a method in which an adhesive agent is thinly coated in advance in each concave row 121 and, thereafter, the one end 140a side of each fiber 140 is arrayed in the concave rows 121. At this time, care is taken that the adhesive agent does not spill over into portions other than the concave rows 121 of the fiber array flat plate 120, and if it does spill over, it is necessary that it be removed immediately. If adhesive agent is present in portions other than the concave rows 121 of the fiber array flat plates 120, then it is not possible to stack other fiber array flat plates 120 in a stable manner on top of this fiber array flat plate 120' on which the fiber bonding has already been completed. There is also a possibility that it will affect the array pitch of the fibers in the fiber array body 150 that is ultimately obtained.

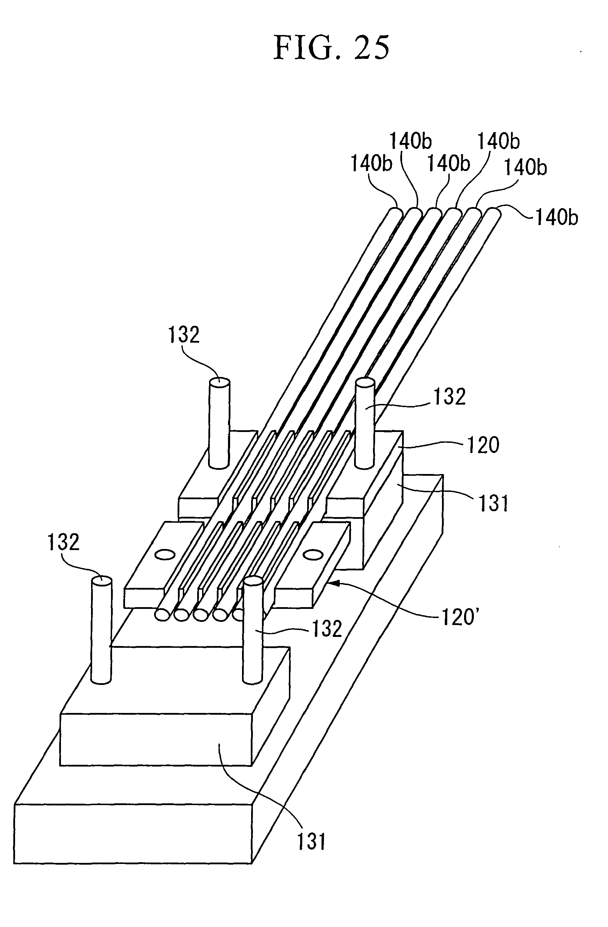

Next, as is shown in FIG. 25, a third step is performed in which the other end (i.e., the free end) 140b sides of the fibers 140 that were arrayed and bonded in the concave rows 121 in the second step are arrayed individually in the concave rows of the fiber array flat plate 120 that was stacked on the positioning member 130 in the first step. The arraying operation here can be easily performed because the one end 140a side of the fibers 140 has already been bonded to the concave rows 121.

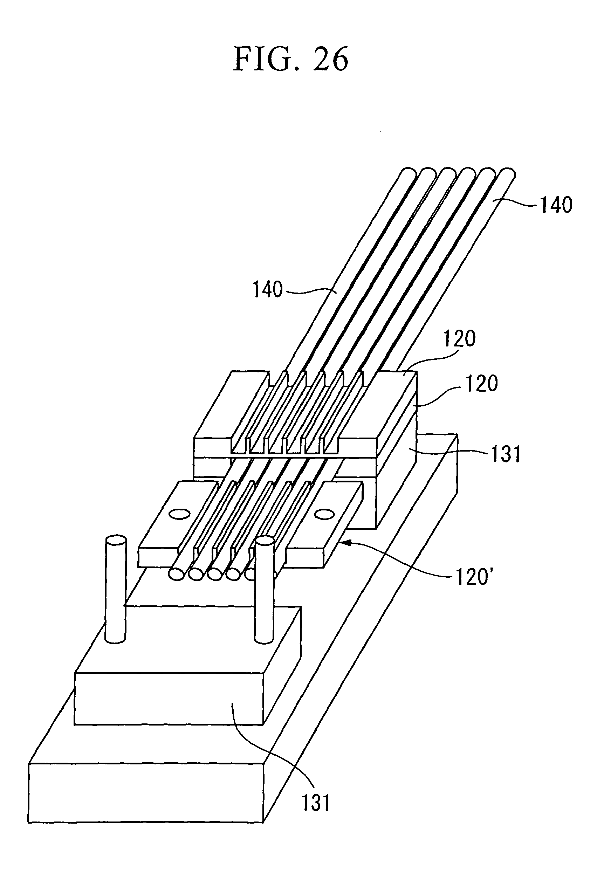

Next, as is shown in FIG. 26, the fourth step is performed in which another fiber array flat plate 120 is stacked on top of the fiber array flat plate 120 that is already stacked on the positioning member 130 so that the respective fibers 140 arrayed here do not spring out from the concave rows 121.

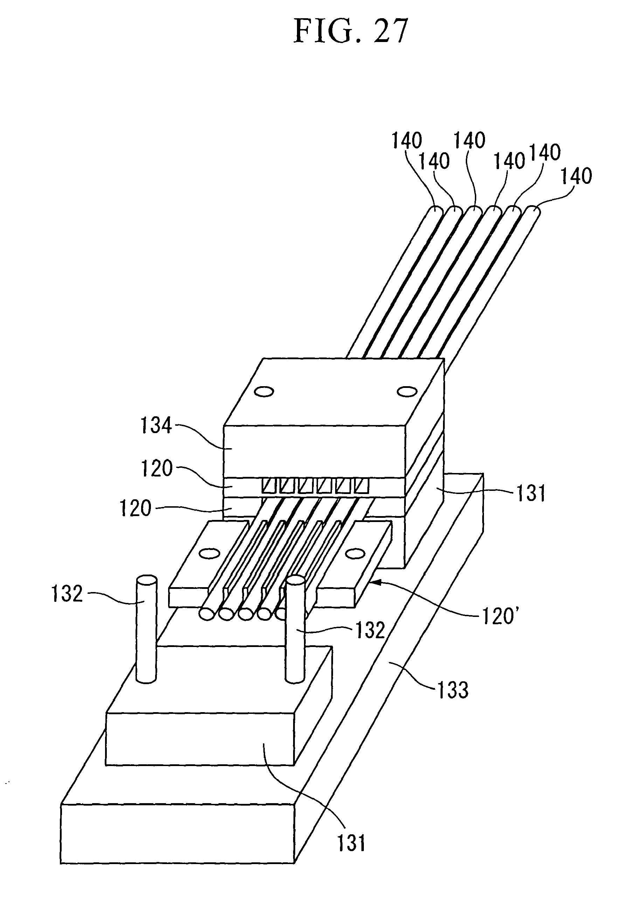

After the fourth step and prior to the fifth step, it is preferable that, as is shown in FIG. 27, a temporary fixing step is performed in which a weight member 134 such as that described in the first embodiment is placed on the fiber array flat plate 120 that was placed in a predetermined position in the fourth step, so that the state of close contact between the fiber array flat plate 120 of the first layer (i.e., the bottom most layer) and the fiber array flat plate 120 of the second layer is maintained. By performing this temporary fixing the six arrayed fibers 140 do not spring out from the concave rows, and the fifth step that is performed next can be performed stably and with improved work efficiency.

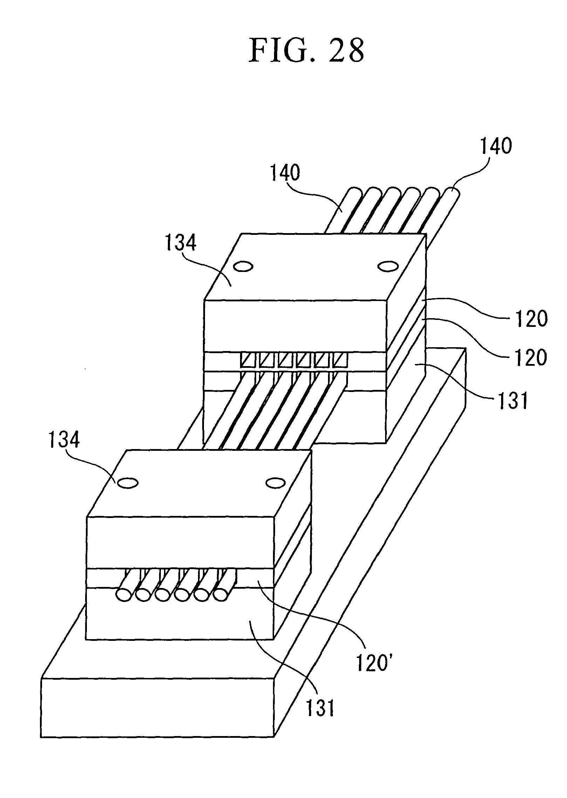

In the fifth step, as is shown in FIG. 28, the fiber array flat plate 120' in which the fibers have already been bonded is positioned a predetermined distance apart such that the concave rows 121 that are formed in this fiber array flat plate 120' are in alignment with the concave rows 121 of the fiber array flat plate 120 that has already been placed in a predetermined position. Next, a weight member 134 is also preferably placed on top of the fiber array flat plate 120' in which the fiber bonding has already been completed.

Next, a sixth step is performed in which tension is imparted to each of the arrayed fibers 140 to a degree that does not cause the fibers 140 to be elastically deformed or to break.

In the sixth step, the same type of tension imparting device 160 as that used in the first embodiment is used and the same type of method to impart the tension can be used, however, at this time, the one end 140a side of the fibers 140 is already in a state of being bonded to the fiber array flat plates 120' in which the fiber bonding is completed, and, furthermore, these fiber array flat plates 120' in which the fiber bonding is completed are fixed by the supporting columns 132 so as not to move. Accordingly, because the fibers 140 do not move even if tension is imparted thereto, in the second embodiment, it is not necessary to fix the fibers 140 using the fiber fixing section 162, and the other end 140b side is fixed in the fixing jig 163.

By performing each of the above described steps, the first layer of fibers 140 can be arrayed in predetermined positions. By then repeating the second and subsequent steps in the same manner, the second and subsequent layers of fibers 140 can be arrayed in predetermined positions.

Moreover, once the arraying of the fibers 140 has been completed as far as the fifth layer, in the same way as in the case of the first embodiment, it is preferable that a spacer 131 in which no concave rows are formed and that can also act as a pressing plate is placed on the topmost layer. This spacer 131 and the base 133 of the positioning member 130 should then be fixed by bolts or screws, so that the stacked state of the stacked fiber array flat plates 120 is maintained and the array of fibers 140 is not disturbed.

Furthermore, in the array operation for each layer, after the sixth step has ended, as was described in the first embodiment, it is also possible to perform a fiber bonding step in which the respective fibers are bonded in the concave rows 121 by inserting an adhesive agent between the fibers 140 that have already been tensioned and the concave rows 121 where these tensioned fibers are arrayed. Note that when this type of fiber bonding step is performed, it is performed on the other end 140b side of the fibers 140 that are fixed by the fixing jig 163.

In the above description concerning the second embodiment, the fourth, fifth, and sixth steps are performed in sequence on the other end 140b side of the bonded fibers 140 after the third step in which the fibers are arrayed individually in the concave rows 121 of the fiber array flat plate 120 that has already been placed in a predetermined position, however, it is also possible to perform the fourth step after the third and then the fifth steps have been performed, or after the third and then the fifth and sixth steps have been performed. In this case, it is preferable that the respective fibers 140 are prevented from springing out from the concave rows 121 during the fifth and sixth steps by using a weight member 134 such as that used in the first embodiment.

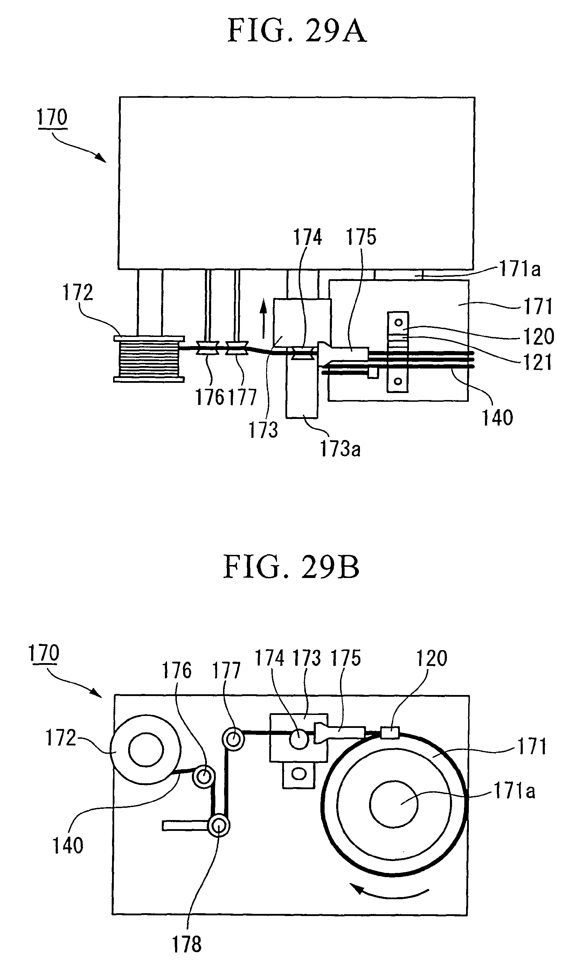

Note that a method that employs a winding mechanism 170 such as that shown in FIGS. 29A and 29B may be used as a method for efficiently manufacturing the fiber array flat plate 120' shown in FIG. 24 in which the fiber bonding has already been completed, namely, as a method for efficiently implementing the second step of the second embodiment.

This winding mechanism 170 is equipped with a fiber winding drum 171 that rotates around a shaft 171a in the direction of the arrow in FIG. 29B. By continuously supplying fiber 140 from a bobbin 172 to this fiber winding drum 171, the fiber 140 is wound onto the fiber winding drum 171. The winding mechanism 170 is also provided with a movable unit 173 that moves along a movement shaft 173a that is provided in parallel with the shaft 171 a of the fiber winding drum 171. A first rotation guide 174 and a fiber guide nozzle 175 are fixed to this movable unit 173. The symbols 176 and 177 in the drawings respectively indicate a second rotating guide and a third rotating guide.

The symbol 178 in the drawings indicates a dancer rotating guide. By moving in a vertical direction in the drawings, the dancer rotating guide 178 applies a constant tension that is not more than a yield load to the fibers 140 such that the fibers 140 do not sag.

Specifically, a braking force is placed on the supply of fibers 140 from the bobbin 172 such that the position of the dancer rotating guide 178 is kept constant. Namely, constant feedback is made to a brake (not shown) provided in the bobbin 172 as to the position in a vertical direction of the dancer rotating guide 178, and the brake is loosened when the dancer rotating guide 178 rises up and is tightened when the dancer rotating guide 178 drops down. In addition to this, it is also possible to keep a constant tension using a tension detector that generates electrical signals corresponding to the tension acting on the fibers 140 being supplied.

When this type of winding mechanism 170 is used to manufacture the fiber bonded fiber array flat plate 120' by individually arraying and bonding the one end 140a side of the fibers 140 that have been cut to predetermined lengths in the concave rows 121 of the fiber array flat plates 120, firstly, a curable adhesive agent that has no effect on the material of the fibers 140 is coated in advance onto the concave rows 121 of a fiber array flat plate 120. Next, this fiber array flat plate 120 is fixed onto the drum face of the fiber winding drum 171 such that the concave rows 121 are orthogonal to the shaft 171a of the fiber winding drum 171, and such that the surface on the side thereof where the concave rows 121 are not formed is in contact with the drum face. Fiber 140 is then supplied from the bobbin 172 to the fiber winding drum 171 via the second rotating guide 176, the dancer rotating guide 178, the third rotating guide 177, the first rotating guide 174, and the fiber guide nozzle 175 in that sequence, and the distal end of the fiber 140 is fixed to the drum face.

Next, the fiber winding drum 171 is continuously rotated in the direction shown by the arrow, and each time the fiber winding drum 171 rotates, the movable unit 173 is moved the same distance as the distance between adjacent concave rows 121 in one direction (i.e., the direction indicated by the arrow in FIG. 29A) along the shaft 171a of the fiber winding drum 173, and the fiber guide nozzle 175 that is fixed to the movable unit 173 is also moved in concert therewith.

By employing this structure, fibers are individually arrayed in sequence in all of the concave rows 121 starting from a concave row 121 positioned furthest to one end of the plurality of concave rows 121 of the fiber array flat plate 120 that is mounted on the fiber winding drum 171.

After fibers have been arrayed in all of the concave rows, the arrayed fibers 140 are cut off outside the fiber array flat plate 120. Consequently, a fiber array flat plate 120' in which the fiber bonding has been completed can be removed from the fiber winding drum 171.

Note that the curable adhesive agent that is coated here in advance in the concave rows 121 is a highly viscous adhesive agent whose curing speed is comparatively slow. If the concave rows 121 are coated with this type of adhesive agent, the fibers 140 are adhered by the viscosity of the adhesive agent. Accordingly, the adhesive agent can be cured after the fiber bonded fiber array flat plate 120' has been removed from the fiber winding drum 171.

In addition to this, it is also possible to use an ultraviolet curable adhesive agent for the curable adhesive agent. In this case, after fibers 140 have been arrayed in all of the concave rows 121, the adhesive agent is cured by ultraviolet light irradiation prior to the fibers 140 being cut. Thereafter, the fiber bonded fiber array flat plates 120' may be removed from the fiber winding drum 171.

The method used to coat the concave rows 121 of the fiber array flat plates 120 in advance with these curable adhesive agents may be a method in which the concave rows 121 are coated with the adhesive agents by hand. However, it is also possible to provide a roll coater or dispenser on the winding mechanism 170 so that the fiber 140 supplied from the bobbin 172 or the concave rows 121 of the fiber array flat plate 120 that is fixed to the fiber winding drum 171 can be automatically coated with adhesive agent.

In the winding mechanism 170 of this example, by moving the movable unit 173 in order to array fibers 140 in sequence in the plurality of concave rows 121, the fiber guide nozzle 175 that is fixed to the movable unit 173 moves uniformly along the shaft 171a of the fiber winding drum 171, however, it is also possible to not move the fiber guide nozzle 175, and, instead, to move the fiber winding drum 171 uniformly along the shaft 171a.

### (Fiber fixing step)

In the method of manufacturing the fiber array body of the present invention, after the above described fiber array step, a fiber fixing step is performed in which the fibers 140 that were arrayed three-dimensionally in the fiber array step are fixed as they are without any further modification. A description will now be given of a fiber fixing step using as an example a method in which spaces between three-dimensionally arrayed fibers 140 are filled with curable resin which is then cured.

Firstly, as is shown in FIG. 30, by performing the fiber array step, 30 fibers 140 are arrayed in their respective concave rows and tension is imparted thereto. A potting block 190 is then placed so as to enclose portions of these fibers 140 that are suspended between two stacked objects 180a and 180b that are obtained by stacking the fiber array flat plates 120 in five layers.

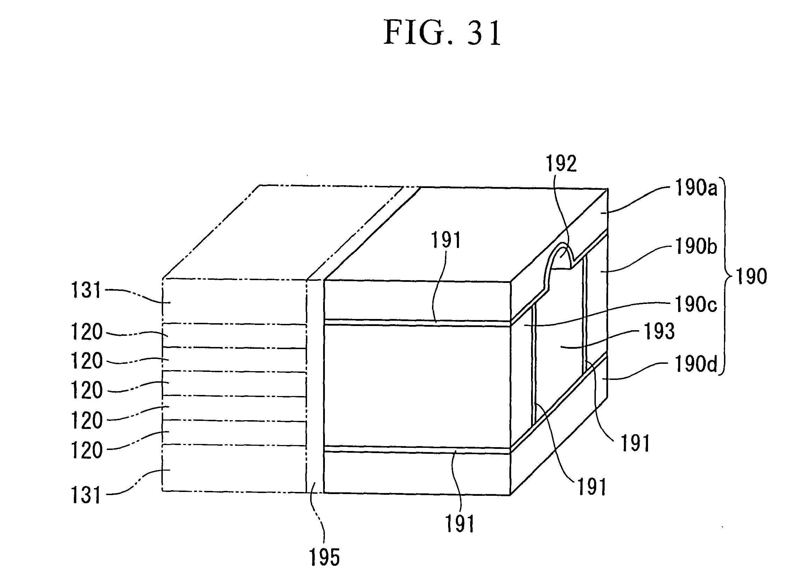

In this example, as is shown in FIG. 31, the potting block 190 is formed in a cylindrical shape by combining four plate shaped block pieces 190a, 190b, 190c, and 190d in the manner shown in the drawing.

The four block pieces 190a, 190b, 190c, and 190d of this example are formed from a metal such as aluminum, and release processing is performed on those surfaces of the block pieces that come into contact with each other and on those surfaces of the block pieces that form interior wall surfaces when the four pieces are combined into a cylinder shape. Examples of the method used to perform this release processing include a method in which, as is shown in the drawings, a sheet-shaped object 191 formed from highly non-adhesive Teflon (registered trademark), polyethylene, or polypropylene or the like is adhered onto each surface, as well as a method in which a coated resin membrane is formed by coating these resins on each surface. If release processing is preformed in this manner, then after a curable resin solution is later poured inside the potting block 190 and is then cured, the potting block 190 can be easily released from the cured resin. Moreover, instead of performing this release processing on the block pieces 190a, 190b, 190c, and 190d, it is also possible to form the potting block itself from a highly non-adhesive resin.

A semi-conical notch 192 that becomes wider towards one end thereof is formed in one surface of the inner wall surfaces of the cylindrical potting block 190. As is described below in detail, this notch 192 forms a filling aperture when a curable resin is poured into the potting block 190 so as to fill it. Note that, in FIG. 31, in order to make the configuration of the potting block 190 easier to understand, the fasteners used to fix the potting block 190, the 30 fibers, and the tension imparting device and the like are omitted from the drawing. The 30 fibers, in actual fact, extend in a left-right direction in the drawing inside a hollow portion of the potting block that is indicated by the symbol 193.

As is shown in FIG. 30, the potting block 190 that is made up of the four block pieces 190a, 190b, 190c, and 190d is fixed by fasteners 194 such as bolts or screws so as to enclose the 30 fibers 140, and so that the one end of the potting block 190 where the filling aperture is not formed is in close contact with the one stacked object 180a of fiber array flat plates 120. At this time, a sealing member 195 formed from silicon rubber or the like that has peelability and elasticity is interposed so that the curable resin solution that is supplied later does not leak out from the close contact portion between the potting block 190 and the stacked object 180a.

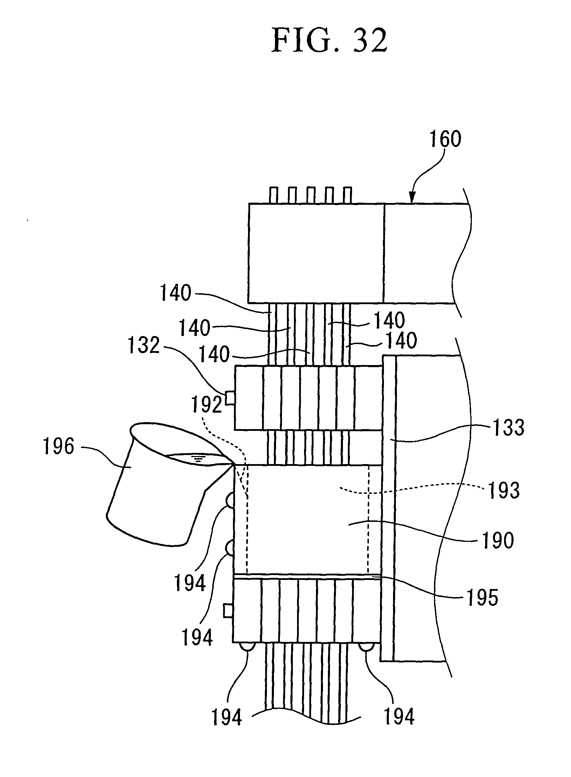

After this, as is shown in FIG. 32, the potting block 190 is stood upright together with the 30 fibers 140, the fiber array jig 110, and the tension imparting device 160 such that the end of the potting block 190 on the side where the filling aperture is formed (i.e., the aperture end) is positioned facing upward.

A spout of a cup 196 that contains curable resin solution is placed against the filling aperture that is formed in the potting block 190 by the semi-conical notch 192, and the curable resin solution is poured into the hollow portion 193 of the potting block 190 so as to spread along the internal wall surfaces of the potting block 190. Subsequently, the potting block 190 is left undisturbed at a predetermined temperature for a predetermined length of time so that the supplied curable resin solution is able to cure.

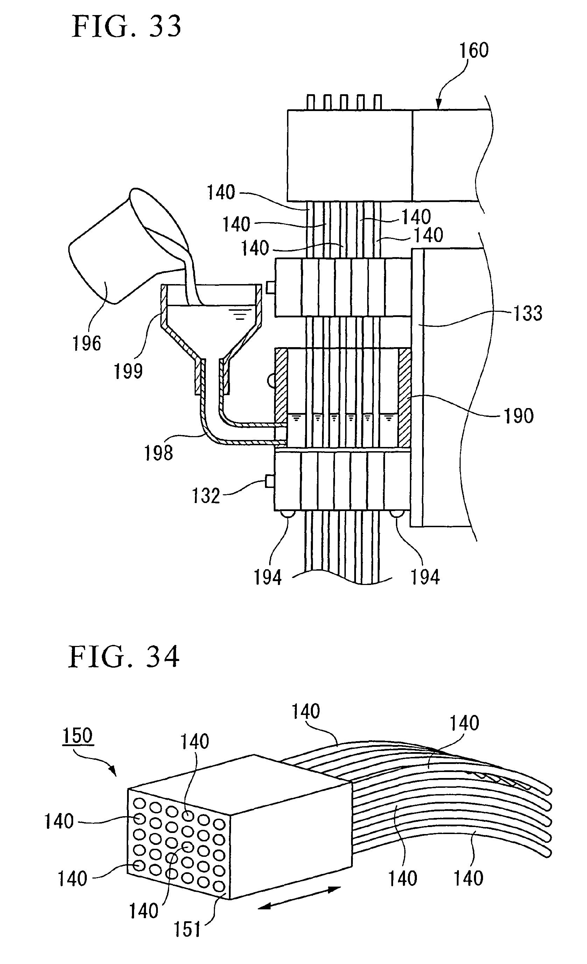

The method used to fill the interior of the potting block 190 with the curable resin solution may also be a method such as that shown in FIG. 33.

Namely, a resin pouring aperture that is used to pour in resin is formed in a side wall of the potting block 190 in the vicinity of one end on the side that is blocked by being placed in tight contact with the stacked object 180a. Next, a tube 198 is prepared and one end of this tube 198 is inserted into the resin pouring aperture. The other end of the tube 198 is connected to a funnel 199. By then pouring curable resin solution into the funnel 199, the curable resin solution gradually fills the interior of the potting block 190 from bottom to top.

Note that when the curable resin solution is being used in this manner, it is preferable that the curable resin solution is stirred and degassed in advance in a vacuum. If it is degassed, there are no air gaps inside the resin after it has cured and the resin sufficiently permeates the space between the fibers 140. It is even more preferable if the curable resin solution is sufficiently degassed and if the above described resin pouring task is conducted under reduced pressure.

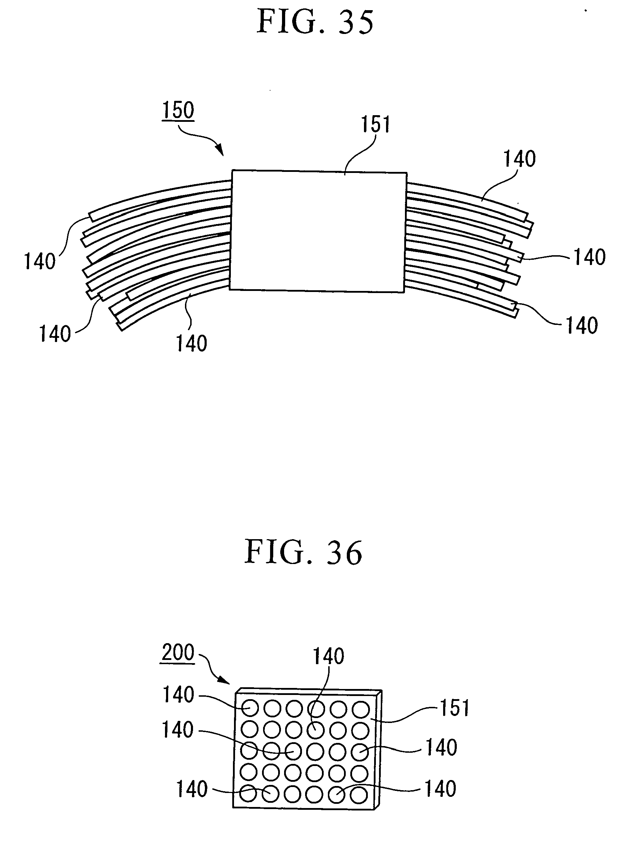

After the curable resin solution with which the interior of the potting block 190 has been filled has cured, the potting block 190 is disassembled into the four block pieces 190a, 190b, 190c, and 190d. The fiber array body 150 that is made up of the 30 fibers 140 and the curable resin 151 that fixes the fibers 140 is separated from the tension imparting device 160 and the respective fiber array flat plates 120. By then cutting the fibers 140 as is appropriate, a fiber array body 150 in a state such as that shown in FIG. 16, or in a state such as that shown in FIG. 34 or FIG. 35 can be obtained.

The type of curable resin that is used here is preferably a curable resin solution that is in a low viscosity state at normal temperature and that is able to fill the hollow portion 193 of the potting block 190 and then cure at room temperature, and that after curing is able to be sliced easily by a cutter or the like into thin pieces having a uniform thickness. Furthermore, the obtained thin pieces should preferably have sufficient hardness and elasticity that they do not become chipped or broken. Examples of this type of curable resin include two-liquid reaction curable resins such as urethane resins.

### (Fiber)

A description has been given above of a fiber array step in which a plurality of fibers 140 are arrayed three-dimensionally, and a fiber fixing step in which the three-dimensionally arrayed fibers 140 are fixed. There is, however, no particular restriction as to the type of fiber that is arrayed and then fixed in the manner described above. Examples thereof include chemical fibers such as synthetic fibers, semisynthetic fibers, regenerated fibers, and inorganic fibers as well as natural fibers.

Representative examples of synthetic fibers include: various types of polyamide based fibers such as nylon 6, nylon 66, and aromatic polyamides; various types of polyester based fibers such as polyethylene terephthalate, polybutylene terephthalate, polylactic acids, and polyglycolic acids; various types of acrylic based fibers such as polyacrylonitrile; various types of polyolefin based fibers such as polyethylene and polypropylene; various types of polyvinyl alcohol based fibers; various types of polyvinylidene chloride based fibers; various types of polyvinyl chloride based fibers and polyurethane based fibers; phenol based fibers; fluorine based fibers such as polyvinylidene fluoride and polytetrafluoroethylene; polyalkylene paraoxybenzoate based fibers; fibers that use (meth)acrylic based resins such as polymethyl methacrylate; and fibers that use polycarbonate based resins.

Representative examples of semisynthetic fibers include: various types of fibers that are based on cellulose based derivatives that use diacetate, triacetate, chitin, or chitosan as a raw material; and various types of protein based fibers that are known as promix.

Representative examples of regenerated fibers include various types of cellulose based regenerated fibers such as rayon, cupra, and polynosic that are obtained using a viscose method, a copper ― ammonia method, or an organic solvent method.

Representative example of inorganic fibers include glass fibers, and carbon fibers.

Representative examples of natural fibers include: vegetable fibers such as cotton, flax, ramie, and jute; animal fibers such as wool and silk; and mineral fibers such as asbestos.

These fibers 140 can be used as is appropriate in the manufacturing of the fiber arrayed bodies 150, however, as is described above, because tension is imparted to the fibers 140 in the fiber array step, of the fibers that are described above, polycarbonate based fibers, polyester based fibers, nylon based fibers, and aromatic polyamide fibers and the like that have a high modulus of elasticity and yield strength are preferably used.

Any fibers other than natural fibers that are obtained from a known fiber forming technology such as a melt spinning method, a wet spinning method, and a dry spinning method, or from a combination of these technologies can also be used.

Furthermore, unprocessed fibers may be used without any modification thereto for the fibers 140, however, if necessary, fibers into which a reactive functional group has been introduced may be used, or fibers that have undergone plasma processing or irradiation processing using γ-rays or electron beams or the like may be used.

Moreover, there is no particular restriction as to the form of the fibers 140, and they may be in monofilament form or in multifilament form. In addition, the fibers 140 may be formed by spun yarn obtained by spinning short fibers. The fibers 140 may also be hollow fibers or fibers having a porous structure. Hollow fibers can be manufactured using a known method that employs special nozzles.

There is no particular restriction as to the outer diameter of the fibers 140 and fibers 140 having the desired outer diameter can be used. However, if the outer diameter is too small, breakages tend to occur and there is a deterioration in the ease of handling. On the other hand, the smaller the outer diameter of the fibers 140, the higher the density at which the fibers 140 are able to be arrayed. Accordingly, the outer diameter of the fibers 140 is set so as to provide both ease of handling and the desired arrayed density. Preferably, the outer diameter of a single fiber is 500 µm or less, and more preferably 300 to 100 µm. If a multifilament fiber is used for the fibers 140, then 83 dtex/36 filament or 82 dtex/45 filament or the like can be used without any modification.

For example, as is described below, a monofilament fiber having an outer diameter of 150 µm is used for the fibers 140 when an organism related substance fixed microarray is being manufactured from the fiber array body 150. When this monofilament fiber is arrayed at an array pitch of 200 µm, the number of fibers 140 that can be arrayed inside a 1 cm² square is 2400. Accordingly, by fixing one type of organism related substance in one single fiber, it is possible to fix 2400 types of organism related substance in each square centimeter. Moreover, if monofilament porous fibers, monofilament hollow fibers or monofilament porous hollow fibers having an outer diameter of approximately 200 µm are arrayed at an array pitch of 300 µm, a fiber array body 150 in which approximately 1000 fibers 140 are arrayed in each square centimeter can be obtained. Accordingly, by fixing one type of organism related substance in one single fiber, it is possible to fix 1000 types of organism related substance in each square centimeter.

### [Method of manufacturing an organism related substance fixed microarray]

Next, a description will be given of a method of manufacturing an organism related substance fixed microarray from a fiber array body 150 obtained by performing the above described fiber array step and fiber fixing step.

In the fiber array step and fiber fixing step, if a fiber in which an organism related substance has previously been fixed is used as the three-dimensionally arrayed and fixed fiber 140, then by slicing the fiber array body 150 that is obtained, such as that shown in FIG. 16, into thin pieces in a direction intersecting the fibers 140, as is shown in FIG. 36, the fibers 140 in which organism related substance has been fixed are fixed by curable resin, and thin slices of an organism related substance fixed microarray 200 can be obtained on both surfaces of which is exposed a cross-section of the fibers 140. The direction of the slices should be a direction that intersects the longitudinal direction of the fibers 140. Preferably, it should be a direction that is perpendicular to the longitudinal direction of the fibers 140.

If the organism related substance fixed in the fibers 140 is, for example, a nucleic acid, then by providing a specimen for the obtained organism related substance fixed microarray 200 and performing hybridization, it is possible to detect a specific nucleic acid array present in the specimen using the nucleic acid fixed to the fibers as a probe.

Note that if a multifilament fiber or spun yarn or the like is used for the fibers 140, then it is possible to fix organism related substance in the gaps between the individual fibers. Moreover, if a hollow or porous fiber is used for the fibers 140, then it is possible to fix organism related substance in the hollow portions or in the gaps within the fibers 140.

If, on the other hand, in the fiber array step and fiber fixing step, a fiber in which an organism related substance has not previously been fixed is used as the three-dimensionally arrayed and fixed fiber 140, then a fiber array body 150 is obtained in the state shown in FIG. 34 or FIG. 35, namely, in a state in which at least one end of the fibers 140 extends beyond the curable resin 151, and after the organism related substance has been fixed in each fiber 140 of this fiber array body 150, the fiber array body 150 is sliced into thin pieces in a direction intersecting the fibers 140.

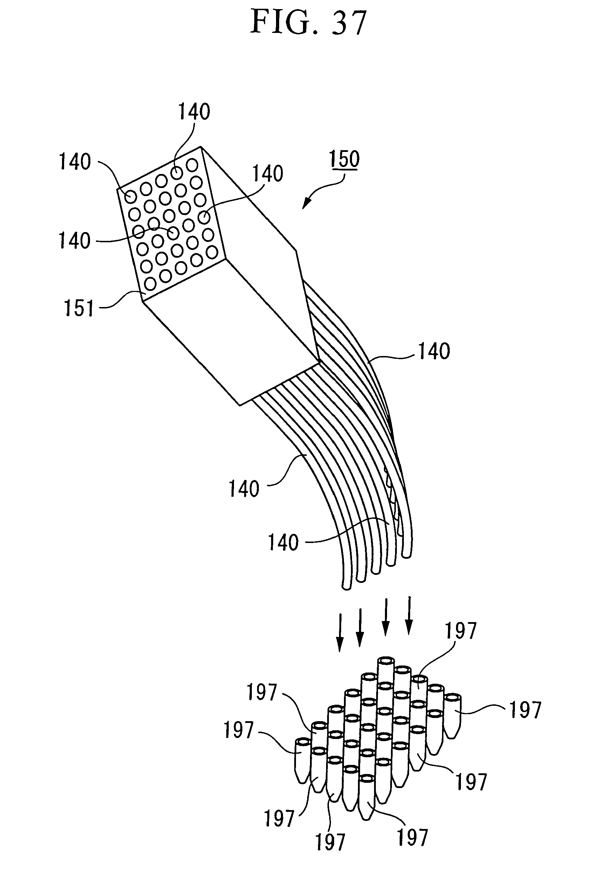

An example of a method used to fix organism related substance in the respective fibers 140 of the fiber array body 150 shown in FIG. 34 in which fibers 140 in which organism related substance has not been fixed are arrayed is the method shown in FIG. 37. This method is effective when porous fibers, hollow fibers, or porous hollow fibers are used for the fibers 140 that by reducing the pressure at one end of the fibers allow a liquid to be suctioned from the other end of the fibers.

Firstly, the same number of containers 197 as the number of the fibers 140, namely, in this case 30 containers 197 are prepared, and a solution that contains an organism related substance is placed inside each container 197. The ends of the fibers 140 that extend from the curable resin 151 of the fiber array body 150 are immersed individually into the containers 197 containing the solution. By then suctioning the solution from the other end of the fibers 140, the solution containing the organism related substance in the hollow portion or porous portion of each fiber 140 is suctioned up and the organism related substance can be introduced into each fiber 140. The type of organism related substance that is introduced into each fiber 140 may be different in every single one of the 30 fibers 140. It is also possible to group together a plurality of fibers and introduce the same type of organism related substance into that group.

Examples of the organism related substance that is introduced into the fibers 140 in this manner include nucleic acids such as deoxyribonucleic acid (DNA), ribonucleic acid (RNA), peptide nucleic acid (PNA), and oxypeptide nucleic acid (OPNA) as well as proteins and polysaccharides. The organism related substance used may be one that is commercially available, or one that is obtained from living cells.

If a nucleic acid is used as the organism related substance, the DNA or RNA from living cells may be prepared using a known method. For example, DNA may be extracted using Blin's method (see Blin et. Al., Nucleic Acids Res. 3: 2303 (1976)). RNA may be extracted using Favaloro's method (see Favaloro et. Al., Methods Enzymol. 65: 718 (1980)).

It is also possible to use chain or toroidal plasmid DNA or chromosome DNA, DNA pieces obtained by slicing these using restriction enzymes or by chemically slicing them, DNA that has been synthesized by enzymes in a test tube, or else chemically synthesized DNA.

These various organism related substance types may be used unmodified as they are, or they may be used in the form of derivatives in which the organism related substance has undergone chemical modification, or, if necessary, they may transformed and then used. For example, if a nucleic acid is used for the organism related substance, then amino formation, biotin formation, digoxigenin formation and the like, which are known as methods for chemically modifying organism related substance (Current Protocols in Molecular Biology, Ed. ; Frederick M. Ausubel et. al. (1990) and Deisotoping Experimental Protocols (1) DIG Hybridization (Shuujunsha)), can be employed.

After the organism related substance has been introduced into the fibers 140, the method that is used to fix it therein is able to utilize the various types of chemical or physical interaction between the fibers 140 and the organism related substance, namely the chemical or physical interaction between the functional groups belonging to the fibers 140 and the constituents forming the organism related substance.

If porous fibers, hollow fibers, or porous hollow fibers are used for the fibers 140, then after the solution that contains the organism related substance has been suctioned and introduced into the hollow portion or porous portion of the fibers 140 constituting the fiber array body 150 using the above described method or the like, the organism related substance can be fixed to these fibers 140 using the interaction between functional groups present on the internal wall surfaces and the like of the hollow portions or porous portions of the fibers 140 and the constituents making up the organism related substance.

If an unmodified nucleic acid is fixed to the fibers 140, then, after the nucleic acid and the fibers 140 have interacted, they can be fixed by baking or ultraviolet light irradiation. If a nucleic acid modified by an amino group is fixed to the fibers 140, then this can be coupled with functional groups of the fibers using a cross linking agent such as glutaraldehyde or 1-ethyl-3-(3-dimethylaminopropyl) carbodiimide (EDC). Furthermore, it is also possible to transform the fixed organism related substance by performing heat processing, alkaline processing, surfactant processing or the like. If organism related substance obtained from raw material such as cells or biomass is used, then it is also possible to perform processing such as removing unnecessary cell components. Note that these processings may be performed separately or may be performed simultaneously. Moreover, the organism related substance may be fixed in the fibers 140 after these processings have been performed on samples containing the organism related substance.

As has been described above, when a plurality of fibers 140 are being arrayed three-dimensionally, the fiber array jig 110 that is used has a plurality of fiber array plates 120 on one surface of which are formed substantially in parallel with each other a plurality of concave rows 121 in each one of which is arrayed a single fiber 140, and has a positioning member 130 that is used to place these fiber array plates 120 in predetermined positions. At least two of the fiber array flat plates 120 are positioned apart from each other by the positioning member 130 such that the concave rows 121 formed in each fiber array flat plate 120 are in alignment with each other, and one or more of the other fiber array flat plates 120 are stacked one by one on top of these fiber array flat plates 120. As a result, the fibers 140 can be arrayed at a high density, with a high degree of accuracy, and extremely efficiently, and it also becomes possible to mass produce the fiber array bodies 150 for industry. Namely, if this type of fiber array jig 110 is used, it is not necessary to perform the complex task of inserting individual fibers through holes formed in a jig, as is the case conventionally. Moreover, because it is not necessary to guide the fibers being inserted into the holes using forceps or the like, the problem of fibers that have already being inserted into adjacent holes obstructing the operation when inserting fibers using forceps does not arise. In addition, because the operation is not one of inserting the fibers 140 into holes, but of arraying them in the concave rows 121, even if the outer diameter of the fibers is narrow and they have low rigidity, they can be arrayed easily so that a greater degree of density in the array of the fibers 140 becomes possible.

Moreover, when this type of fiber array jig 110 is used, the work involved in the fiber array step can be divided so that, from this viewpoint as well, the productivity of the fiber array body 150 is improved.

For example, if the above described fiber array step is performed using the second embodiment, then the task can be divided into a step in which fiber bonded fiber array flat plates 120' can be continuously manufactured in large volume using the winding mechanism 170 shown in FIGS. 29A and 29B, and all steps other than this step. As a result, different operators are able to advance the work simultaneously. In contrast, in work in which the fibers are inserted one by one in a jig in which holes are formed, as is the case conventionally, the entire task of inserting all of the fibers in sequence is just one step and it is difficult for the labor involved therein to be divided. As a result, the work efficiency is poor.

Namely, by using the fiber array jig 110 described above, even if the outer diameter of the fibers 140 is small and they are difficult to handle, they can still be arrayed accurately at a high density and also efficiently, and mass production of the fiber arrayed bodies is possible because the manufacturing tasks can be performed separately. As a result, it is also possible to mass produce organism related substance fixed microarrays that enable a large variety of samples to be analyzed.

### [Examples]

The present invention will now be described specifically using the examples given below.

### (Reference example 1)

Probe A and probe B below were synthesized.

The synthesis of the oligonucleotides was performed using an automatic DNA/RNA synthesizer (model 1394) manufactured by PE Biosystems. In the final step of the DNA synthesis, an aminohexyl group [NH₂(CH₂)₆-] was introduced into the 5' terminal of the respective nucleotides using an aminolink II (trade name - manufactured by Applied Biosystems).

### (Reference example 2)

A solution A formed from the composition described below was prepared.
PMMA monoacrylate (molecular weight 6000) : 5 parts by mass
Toluene : 95 parts by mass

### (Reference example 3)

A solution B formed from the composition described below was prepared. Acrylamide : 9 parts by mass
N, N' - methylene bisacrylamide : 1 part by mass
2, 2' - azobis (2-methylpropionamidine) dihydrochloride (V - 50) : 0.1
parts by mass
water: 90 parts by mass

### (Example 1)

### (1) Introduction and fixing of organism related substance in a hollow fiber

A hollow fiber made out of nylon (i.e., a melt spun product made of nylon 6 having an outer diameter of 0.28 mm, and an inner diameter (i.e., the diameter of the hollow portion) of 0.2 mm) was cut into 700 mm lengths so that 900 nylon hollow fibers were prepared. Formic acid was suctioned from one end of these hollow fibers into the hollow portion thereof and was held therein for one minute. Next, a large volume of water at room temperature was poured into the hollow portions so that the hollow portions were properly washed, and they were then dried. This constituted the preprocessing of the nylon hollow fibers.

The oligonucleotide probe A and probe B having amino groups that were synthesized in Reference example 1 were fixed to the internal walls of the nylon hollow fibers that had undergone preprocessing. Specifically, a solution obtained by adding probe A to a potassium phosphate buffer solution was introduced via one end portion of 450 hollow fibers, while a solution obtained by adding probe B to a potassium phosphate buffer solution was introduced via one end portion of the other 450 hollow fibers. These were then kept overnight at 20 °C.

Thereafter, interior portions of the nylon hollow fibers were washed in a potassium phosphate buffer solution and a potassium chloride aqueous solution, so that nylon hollow fibers to which organism related substance was fixed were obtained with probe A being fixed to the internal wall surfaces of 450 hollow fibers and probe B being fixed to the internal wall surfaces of 450 hollow fibers.

### (2) Manufacturing of hollow fiber array body to which organism related substance has been fixed

### (i) Fiber array step

A fiber array step was performed following the first embodiment that was described using FIGS. 17 to 22, so that 900 nylon hollow fibers to which organism related substance had been fixed were arrayed in 30 rows multiplied by 30 layers.

Specifically, 60 flat plates made of SUS 304 spring steel having a width of 30 mm, a length (i.e., the direction of the concave rows) of 10 mm, and a thickness of 0.42 mm, and in which 30 concave rows 121 having a width of 0.3 mm and a depth of 0.3 mm were formed in parallel at a pitch of 0.42 mm, and in which positioning through holes 122 having a diameter of 4 mm were formed in the vicinity of the two side ends (i.e., in the transverse direction) thereof were used as the fiber array flat plates 120 of the fiber array jig 110.

Two groups (with two columns in each group) of supporting columns 132 were erected on a base 133 made from a rectangular flat plate, and this was used as a positioning member 130 for positioning the above fiber array flat plates 120 in predetermined positions. Note that the gap between one group of supporting columns and the other group of supporting columns was 150 mm.

In addition, flat plates that had a thickness of 15 mm and that, apart from the fact that concave rows were not formed therein, were the same size as the fiber array flat plates 120, and in which the positioning through holes were formed in the same manner were prepared as spacers 131.

Note that nylon hollow fibers having probe A fixed to the internal walls thereof and nylon hollow fibers having probe B fixed to the internal walls thereof were arrayed in parallel alternatingly in the concave rows 121 of each fiber array flat plate 120. In addition, a temporary fixing step was performed for each layer using 1 kg weight members 134.

The tension imparting device 160 shown in FIG. 21 was used to impart tension to each fiber, and tension was imparted such that a load of 15N acted on each nylon hollow fiber, and each fiber was pulled such that there was no sagging in any of the fibers.

Furthermore, in the task of arraying each layer, after the fourth step had ended, a fiber bonding step was performed in which the weight member 134 on the fixing jig 163 side and the fiber array flat plate 120 beneath it are temporarily removed, and the respective fibers are bonded to the concave rows 121 by coating an adhesive agent between the hollow fibers and the concave rows 121 where these hollow fibers are arrayed. A water soluble vinyl acetate based adhesive agent ("Fast Dry" used for bonding wood: Konishi (Ltd.)) was used for the adhesive agent, and this was smeared on so as to sufficiently cover the spaces between the adhesive agent, the concave rows, and the hollow fibers using a squeegee equipped with a urethane blade. After the adhesive agent was smeared on in this manner, the fiber array flat plate 120 and the weight member 134 were put back in place and pressure was applied for several seconds at a load of approximately 200N.

After the 30th layer of fibers was arrayed, then if another fiber array flat plate is to be placed on top thereof (i.e., in the third step), a spacer 131 in which no concave rows have been formed can be stacked instead of the fiber array flat plate and used as a presser plate. Namely, the spacer 131 that is stacked on the topmost layer is fixed by screws to the base 133 of the positioning member 130.

### (ii) Fiber fixing step

As is shown in FIG. 32, the hollow portion 193 of the potting block 190 was filled with a curable resin solution.

Specifically, two aluminum plates (a) having a thickness of 11.1 mm, a width of 50 mm, and a length of 100 mm and two aluminum blocks (b) having a thickness of 19.5 mm, a width of 14.8 mm, and a length of 100 mm making a total of four pieces were used for the potting block 190. Release processing was performed on the potting block 190 using Teflon (registered trademark) adhesive tape (Nitoflon adhesive tape: manufactured by Nitto Denko (Ltd.)) having a thickness of 0.13 mm and a width of 50 mm. Namely, Teflon (registered trademark) adhesive tape was stuck onto the surfaces (i.e.,. the surfaces having a width of 50 mm and a length of 100 mm)of the aforementioned two aluminum plate (a) pieces and onto the three surfaces (i.e.,. three of the four surfaces having a thickness of 19.5 mm and a length of 100 mm)of the aforementioned two aluminum block (a). Note that a filling aperture that is formed by a semi-conical notch 192 is formed at one end of one surface of one of the aluminum plates (a) and Teflon (registered trademark) adhesive tape is stuck onto this surface.

These four pieces were then combined in the manner shown in FIG. 31 so as to enclose the 30 rows by 30 layers of organism related substance fixed nylon hollow fibers arrayed in the above described (i), and a 20 mm × 20 mm × 100 mm hollow portion 193 was formed by the potting block 190. Note that silicon packing having a thickness of 1 mm was used as the sealing member 195 that was interposed such that the supplied curable resin solution did not leak from the portion of tight contact between the potting block 190 and the stacked object 180a. The silicon packing was the same shape as the end surface of the potting block 190 and, in the same way, is provided with a 20 mm x 20 mm aperture portion of which a portion was cut open. This cut open portion was opened up and arranged so as to span across the 30 rows by 30 layers of nylon hollow fibers. In addition, the stacked object 180a and the potting block 190 were fastened together under pressure by the fasteners 194 in the form of screws.

A two-solution polyurethane resin (curing agent: Nipporan 4276, main agent: coronate 4403 with two parts by mass of carbon black as an additive, mixture proportion: curing agent 38 parts by mass to main agent 62 parts by mass, manufactured by Japan Polyurethane Industries (Ltd.)) that had been degassed by being stirred and mixed in a vacuum was poured from the cup 196, as is shown in FIG 32, into the hollow portion 193 of the potting block 190 along internal wall surfaces of the potting block 190.

In this state, after the resin was cured by being kept at room temperature for 16 hours, the potting block 190 was disassembled into four pieces, and a fiber array body made of nylon hollow fibers having the configuration shown in FIG 16 (i.e., having 30 rows by 30 layers) was obtained in which gaps between the nylon hollow fibers were filled with polyurethane resin, and whose cross-sectional dimensions were 20 mm x 20 mm x length of 80 mm, and in which organism related substance was fixed to the interior walls.

In addition, by slicing this fiber array body in thin pieces having a thickness of 0.5 mm, approximately 140 organism related substance fixed microarrays were obtained. (Example 2)

### (1) Manufacturing of hollow fiber array body to which organism related substance has not been fixed

### (i) Fiber array step

A fiber array step was performed following the second embodiment that was described using FIGS. 23 to 30, so that 900 polycarbonate hollow fibers to which organism related substance had not been fixed were arrayed in 30 rows by 30 layers.

Specifically, the same fiber array jig 110 as in Example 1 was used, and fibers were bonded in the respective concave rows 121 of 30 of the fiber array flat plates 120 thereof so that 30 fiber bonded fiber array flat plates 120' in which 30 fibers were bonded were prepared. The winding mechanism 170 shown in FIGS. 29A and 29B was used in the preparation of the 30 fiber bonded fiber array flat plates 120'. Namely, fiber array flat plates 120 the concave rows 121 of which had been coated with a water soluble vinyl acetate based adhesive agent ("Fast Dry" used for bonding wood: Konishi (Ltd.)) were fixed to the fiber winding drum (having a diameter of 320mm) 171 of the fiber winding mechanism 170 shown in FIGS. 29A and 29B. Polycarbonate hollow fibers (i.e., a melt spun product made of polycarbonate with an additive of one part by mass of carbon black and having an outer diameter of 0.28 mm, and an inner diameter of the hollow portion of 0.16 mm) were then unwound from the bobbin 172 onto which they were wound such that tension of 0.1 N was acting thereon, and were consecutively inserted into the 30 concave rows 121 of the fixed fiber array flat plates 120.

Next, the adhesive agent that was squeezed out from the concave rows 121 by the insertion therein of the polycarbonate hollow fibers was spread fully over the concave rows 121 by a squeegee equipped with a urethane blade, and excess adhesive agent was totally removed. Thereafter, the polycarbonate hollow fibers were cut at a portion thereof 30 cm distant from the fiber array flat plates 120 in parallel with the shaft 171a of the fiber winding drum 171, and the fiber bonded fiber array flat plates 120' were removed from the fiber winding drum 171. The fiber bonded fiber array flat plates 120' that were obtained were then stored in a suspended state using the positioning through holes formed in the fiber bonded fiber array flat plates 120' such that the polycarbonate hollow fibers did not become entangled with each other.

This operation was then repeated 30 times. As a result, 30 polycarbonate hollow fiber bonded fiber array flat plates 120' in which 30 polycarbonate hollow fibers were bonded in the concave rows 121 were obtained.

PMMA monoacrylate was then introduced into the internal walls of each hollow fiber of the 30 fiber bonded fiber array flat plates 120' that were obtained.

Specifically, one end of each of the 30 polycarbonate fibers of the fiber bonded fiber array flat plates 120' was immersed in a semi cylindrical container containing the solution A prepared in Reference example 2. The other end of the 30 polycarbonate fibers were first aligned in parallel with the adhesive agent side of a silicon tape having a width of 20 mm, a length of 50 mm, and a thickness of 1 mm and having an adhesive agent provided on one side thereof. The fibers were then wound onto the tape in a columnar shape in their longitudinal direction and were cut in a substantially perpendicular direction relative to the fibers in a central portion in the longitudinal direction of the columnar shape. As a result, end surfaces of the 30 hollow fibers were exposed. Next, these end surfaces were press-inserted respectively into one end of polycarbonate pipes having an inner diameter smaller than the diameter of the end surfaces. The other ends of these pipes were then connected to a vacuum pump via a trap and the solution A was suctioned by reduced pressure into the polycarbonate hollow fibers.

After the solution introduced into the polycarbonate hollow fibers was removed to the trap, the one end of each of the polycarbonate hollow fibers was removed from the containers containing the solution A and, in that state, the vacuum pump was operated. In this manner, air was suctioned into the hollow fibers, resulting in solvent on the polycarbonate hollow fiber internal walls being evaporated and PMMA monoacrylate being introduced onto the hollow fiber internal walls.

900 fibers were arrayed in 30 rows by 30 layers by performing the fiber array step in accordance with the second embodiment using the 30 fiber bonded fiber array flat plates 120' in which 30 hollow fibers having PMMA monoacrylate introduced onto the internal walls thereof that were obtained in the above manner were bonded to concave rows 121, and using the 30 fiber array flat plates 120 to which fibers had not been bonded, and using the same positioning member 130 as that used in Example 1.

Furthermore, in the task of arraying each layer, after the sixth step had ended, a fiber bonding step was performed in which the weight member 134 on the fixing jig 163 side and the fiber array flat plate 120 beneath it are temporarily removed, and the respective fibers are bonded to the concave rows 121 by coating the same adhesive agent as that used in Example 1 between the hollow fibers and the concave rows 121 where these hollow fibers are arrayed. After the adhesive agent was smeared on in this manner, the fiber array flat plate 120 and the weight member 134 were put back in place and pressure was applied for several seconds at a load of approximately 200N.

After the 30th layer of fibers was arrayed, then only if another fiber array flat plate is to be placed on top thereof (i.e., in the fourth step), a spacer 131 the same as that of Example 1 in which no concave rows have been formed can be stacked instead of the fiber array flat plate and used as a presser plate. Namely, the spacer 131 that is stacked on the topmost layer is fixed by screws to the base 133 of the positioning member 130. The same tension imparting device 160 as in Example 1 was then used and tension was imparted to each fiber such that a load of 15N acted thereon.

### (ii) Fiber fixing step

As is shown in FIG 33, the hollow portion 193 of the potting block 190 was filled with a curable resin solution.

Specifically, using the same potting block 190 as that used in Example 1, the same Teflon (registered trademark) adhesive tape as in Example 1 was stuck thereon. However, unlike Example 1, instead of the filling aperture, a single aluminum plate (a) having a circular resin pouring aperture with a diameter of 9.8 mm formed therein was used. The resin pouring aperture was formed in the center in the transverse direction of the aluminum plate (a) at a position 12 mm from one of the short sides thereof. In addition, the Teflon (registered trademark) adhesive tape was cut out in the shape of the resin pouring aperture such that the Teflon (registered trademark) adhesive tape did not block the resin pouring aperture. These four pieces were then combined in the same manner as in Example 1 so as to enclose the 30 rows by 30 layers of polycarbonate hollow fibers to which organism related substance had not been fixed that were arrayed in the above described (i) as is shown in FIG. 33, and a 20 mm × 20 mm × 100 mm hollow portion 193 was formed by the potting block 190. Note that the same sealing member 195 as in Example 1 was interposed into the portion of tight contact between the potting block 190 and the stacked object 180a such that the supplied curable resin solution did not leak from that portion. In addition, the stacked object 180a and the potting block 190 were fastened together under pressure by the fasteners 194 in the form of screws.

As is shown in FIG 33, one end of a vinyl tube 198 having an outer diameter of 10 mm and an inner diameter of 8 mm was pushed into the resin pouring aperture formed in the aluminum plate (a) and the other end thereof was connected to a funnel 199. The same two-solution polyurethane resin as was used in Example 1 that had been degassed by being stirred and mixed in a vacuum was then poured into this funnel 199 so that the interior of the potting block 190 was filled with resin.

In this state, after the resin was cured by being kept at room temperature for 16 hours, the potting block 190 was disassembled into four pieces, and a fiber array body made of polycarbonate hollow fibers having the configuration shown in FIG. 35 (i.e., having 30 rows by 30 layers) was obtained in which gaps between the polycarbonate hollow fibers were filled with polyurethane resin, and whose cross-sectional dimensions were 20 mm × 20 mm × length of 80 mm, and in which organism related substance was fixed to the interior walls.

### (2) Fixing of organism related substance in a hollow fiber array in which organism related substance has not been fixed

Probe A and probe B that were synthesized in Reference example 1 were added to the solvent B prepared in Reference example 3, and a probe A aqueous solution in which probe A was contained in a concentration of 0.5 nmol/L and a probe B aqueous solution in which probe B was contained in a concentration of 0.5 nmol/L were prepared.

Next, all of the ends at one end of the polycarbonate hollow fibers in portions of the obtained fiber array body that had not been fixed by resin were bundled together, and the bundled portion was bound using a rubber band. A portion slightly on the distal end side of the bound portion was then cut. These cut ends were then immersed in a cylindrical container having an internal diameter of 15 mm and a height of 30 mm and that was approximately 1/3^{rd} full of the same urethane resin solution that was used previously to fix the fibers together. The urethane resin was then cured so that the polycarbonate hollow fibers were sealed.

The other ends of the polycarbonate hollow fibers were separated in alternating layers so that, out of all the layers, two groups made up of 15 fibers by 30 layers were formed. The distal ends of each bundle of 450 fibers was then inserted respectively into containers containing the probe A aqueous solution and the probe B aqueous solution.

Next, the fiber array bodies having the ends on one side thereof sealed and having the ends on the other side thereof inserted into containers containing the probe A aqueous solution or the probe B aqueous solution were placed as they were inside a thermal chamber and the interior of the chamber was held under reduced pressure for 5 minutes. Thereafter, nitrogen gas was gradually introduced into the chamber and the chamber was restored to normal pressure. As a result, the probe A aqueous solution and the probe B aqueous solution were drawn into the interior of the hollow fibers. A polymerization reaction was then conducted using a method in which the chamber that was full of nitrogen gas at normal pressure was then heated for 3 hours at a set temperature of 70 °C, and the heating was then stopped and the chamber was left at room temperature.

As a result, a polycarbonate hollow fiber array body was obtained that held inside it a gel in which the probe A and probe B, which are organism related substance, were fixed.

This fiber array body was then sliced into thin pieces having a thickness of 0.5 mm and 140 organism related substance fixed microarrays were obtained.

### INDUSTRIAL APPLICABILITY

As has been described above, by using the fiber array device of the present invention, it is possible to array fibers at a high density accurately in an extremely short period of time. Moreover, according to the present invention, it is also possible to prevent errors when arraying fibers unlike when a conventional method is used in which fibers are arrayed by being inserted into holes in a jig.

Accordingly, according to the present invention, by efficiently manufacturing fiber array bodies of fibers in which organism related substance has been fixed, and then slicing these into thin pieces in a direction intersecting the direction of the fibers, it is possible to easily produce in mass organism related substance fixed microarrays in which the type and quantity of a specific organism related substance can be detected in a sample.

Moreover, by using the fiber array jig of the present invention, fibers can be efficiently arrayed three-dimensionally at a high density and with a high degree of precision. Moreover, fiber array bodies in which three-dimensionally arrayed fibers are fixed by resin can be mass produced for industry.

Namely, if the fiber array jig of the present invention is used, time and energy are not consumed by the task of inserting fibers one by one through holes formed in a jig, as is the case conventionally. Moreover, because it is not necessary to guide the fibers being inserted to the holes using forceps or the like, the problem of fibers that have already being inserted into adjacent holes obstructing the operation of inserting fibers using forceps does not arise. In addition, according to the present invention, because the operation is not one of inserting the fibers into holes, but of arraying them in the concave rows, even if the outer diameter of the fibers is narrow and they have low rigidity, they can be arrayed easily so that a greater degree of density in the array of the fibers becomes possible.

Furthermore, when using the fiber array jig of the present invention, the work involved in the fiber array step can be divided so that, from this viewpoint as well, the productivity of the fiber array body is improved.

Accordingly, by using the fiber array jig of the present invention to manufacture fiber array bodies of fibers in which organism related substance such as nucleic acids, proteins, and polysaccharides and the like has been fixed, and then slicing these into thin pieces in a direction intersecting the direction of the fibers, it is possible to easily produce in mass organism related substance fixed microarrays in which the type and quantity of a specific organism related substance can be detected in a sample.
[Array table]
As per attached sheet
[Array table free text]
Array number 1: Synthesized DNA
Array number 2: Synthesized DNA

## Claims

1. A fiber array device for arraying fibers three-dimensionally, comprising:
a fiber winding device onto which a fiber is wound; and
a fiber supply device that supplies the fiber to the fiber winding device, wherein
the fiber supply device is provided with a movable guide that supplies fiber to the fiber winding device while undergoing relative displacement, and wherein
the fiber winding device has a fiber winding bobbin that winds fiber onto its circumference as it rotates, and fiber array flat plates a plurality of which are stacked respectively at a plurality of predetermined positions on the circumference of the fiber winding bobbin and on whose respective external surfaces the fibers are arrayed.

2. The fiber array device according to claim 1, wherein a plurality of concave rows in which fibers are individually arrayed are formed substantially parallel with each other in an external surface of the fiber array flat plates, and the fiber array flat plates are stacked on the circumference such that the concave rows are perpendicular to a rotation shaft of the fiber winding bobbin.

3. The fiber array device according to claims 1 or 2, wherein an array pitch of fibers that are arrayed on external surfaces of the fiber array flat plates making up at least one stacked object from among each of the stacked objects in the plurality of predetermined positions is different from an array pitch of fibers that are arrayed on external surfaces of the fiber array flat plates making up the other stacked objects.

4. The fiber array device according to any of claims 1 through 3, wherein at least two positioning through holes are formed in the fiber array flat plates, and supporting columns that are inserted through the positioning through holes are provided on the circumference of the fiber winding bobbin.

5. A fiber array method for arraying fibers three-dimensionally using the fiber array device according to any one of claims 1 through 4, comprising:
a first step in which the individual fiber array flat plates are arranged in the plurality of predetermined positions;
a second step in which the fiber winding bobbin is rotated a predetermined number of times, and fiber is supplied while the movable guide is being moved so that the fibers are gradually arrayed on the arranged fiber array flat plates; and
a third step in which the other fiber array flat plates are each stacked on top of each fiber array flat plate on which fibers have been arrayed, wherein
the second step and third step are repeated a plurality of times.

6. A method of manufacturing a fiber array body comprising fixing the fibers that have been arrayed three-dimensionally using the fiber array method according to claim 5.

7. The method of manufacturing a fiber array body according to claim 6, wherein a curable resin is used to fill gaps between the fibers and is then cured so as to fix the fibers.

8. The method of manufacturing a fiber array body according to claim 6 or claim 7, wherein organism related substance is fixed in advance to the fibers.

9. The method of manufacturing a fiber array body according to claim 6 or claim 7, wherein organism related substance is fixed to fixed fibers.

10. A method of manufacturing an organism related substance fixed microarray, comprising slicing the fiber array body manufactured using the method according to claim 8 or claim 9 into thin pieces in a direction intersecting the fibers.

11. A fiber wound object comprising:
a fiber winding device that has a fiber winding bobbin and stacked objects made up of two or more fiber array flat plates that have each been stacked at a plurality of predetermined positions on the circumference of the fiber winding bobbin; and
fibers that are arrayed and wound onto an external surface of each fiber array flat plate.

12. The fiber wound object according to claim 11, wherein an array pitch of fibers that are arrayed on external surfaces of the fiber array flat plates making up at least one stacked object from among each of the stacked objects in the plurality of predetermined positions is different from an array pitch of fibers that are arrayed on external surfaces of the fiber array flat plates making up the other stacked objects.

13. A fiber array jig for arraying a plurality of fibers three-dimensionally, comprising:
a plurality of fiber array flat plates on one surface of each of which a plurality of concave rows in which fibers are individually arrayed are formed substantially parallel with each other;
and a positioning member that is used to place these fiber array flat plates in predetermined positions, wherein
at least two of the fiber array flat plates are placed apart from each other by the positioning member such that the concave rows formed on these fiber array flat plates are in alignment with each other, and one or more of the other fiber array flat plates is stacked on top of these fiber array flat plates.

14. The fiber array jig according to claim 13, wherein at least two positioning through holes are formed in each of the fiber array flat plates, and the positioning member is provided with supporting columns that place each fiber array flat plate in a predetermined position by being inserted through each of the positioning through holes.

15. A method for manufacturing a fiber arrayed body comprising:
a fiber array step in which a plurality of fibers are arrayed three-dimensionally using the fiber array jig according to claim 13 or claim 14; and
a fiber fixing step in which the three-dimensionally arrayed fibers are fixed.

16. The method of manufacturing a fiber array body according to claim 15, wherein the fiber array step comprises: a first step in which at least two of the fiber array flat plates are placed apart from each other by the positioning member such that the concave rows formed on these fiber array flat plates are in alignment with each other; a second step in which fibers are individually arrayed so as to span across the concave rows that are positioned in alignment with each other; a third step in which other fiber array flat plates are stacked respectively on top of the at least two fiber array flat plates; and a fourth step in which tension is imparted to the arrayed fibers, wherein each of the second step through fourth step is repeated a plurality of times.

17. The method of manufacturing a fiber array body according to claim 15, wherein the fiber array step comprises: a first step in which at least one of the fiber array flat plates is placed in a predetermined position by the positioning member; a second step in which a fiber array flat plate that has completed fiber bonding is manufactured by arraying and bonding one by one ends on one side of fibers that have been cut to a predetermined length in the concave rows in the other one of the fiber array flat plates; a third step in which ends on the other side of the arrayed and bonded fibers are arrayed one by one in the concave rows of the fiber plate that was placed in the predetermined position; a fourth step in which another fiber array flat plate is stacked by the positioning member on top of the fiber array flat plate that was placed in the predetermined position; a fifth step in which the fiber array flat plate that has completed fiber bonding is placed apart by the positioning member from the fiber array flat plate that was placed in the predetermined position such that the concave rows formed on the fiber array flat plate that has completed fiber bonding are in alignment with the concave rows formed on the fiber array flat plate that was placed in the predetermined position; and a sixth step in which tension is imparted to the arrayed fibers, wherein each of the second step through sixth step is repeated a plurality of times.

18. The method of manufacturing a fiber array body according to claim 17, wherein, the second step comprises a step in which the fiber array flat plates are mounted on drum faces of a fiber winding drum that rotates around a shaft and are rotated, and fiber is continuously supplied to the fiber winding drum so that the fibers are arrayed in sequence in the plurality of concave rows that are formed in the fiber array flat plates, and thereafter the arrayed fibers are cut off outside the fiber array flat plates.

19. The method of manufacturing a fiber array body according to any one of claims 15 through 18, wherein, in the fiber fixing step, a curable resin is used to fill gaps between the three-dimensionally arrayed fibers and is then cured.

20. The method of manufacturing a fiber array body according to any one of claims 15 through 19, wherein organism related substance is fixed in advance to the fibers.

21. The method of manufacturing a fiber array body according to any one of claims 15 through 19, wherein, after the fiber fixing step, organism related substance is fixed to the fibers.

22. A method of manufacturing an organism related substance fixed microarray, comprising slicing the fiber array body manufactured using the method according to claim 20 or claim 21 into thin pieces in a direction intersecting the fibers.
